# EUROPEAN PATENT APPLICATION

(11) **EP 4 617 704 A1**
(43) Date of publication of application: **17.09.2025**
(21) Application number: 22967666.3
(22) Date of filing: 09.12.2022
(51) Int. Cl.: G01S 5/02

(54) **DISTANCE MEASUREMENT METHOD AND RELATED APPARATUS**

(71) Applicant: Huawei Technologies Co., Ltd., Shenzhen, Guangdong 518129 (CN)
(72) Inventor: WANG, Yong, Shenzhen, Guangdong 518129 (CN); LI, Dejian, Shenzhen, Guangdong 518129 (CN); WANG, Jian, Shenzhen, Guangdong 518129 (CN)
(74) Representative: Goddar, Heinz J.
(86) International application number: PCT/CN2022/138219
(87) International publication number: WO 2024/119519

(57) **Abstract**

A ranging method is provided. The method includes: A first node determines a first security parameter based on a plurality of input parameters (S1301), obtains a second measurement sequence based on the first security parameter and a first measurement sequence (S1302), and sends a first security measurement signal (S1303); and a second node determines the first security parameter based on the plurality of input parameters (S1304), and obtains the first measurement sequence based on the first security parameter and the first security measurement signal (S1305). In this way, the measurement signal is not easily listened to by an attacker. A ranging apparatus, a communication apparatus, a chip, a communication system, a terminal, a computer-readable storage medium, and a computer program product are further disclosed.

## Description

### TECHNICAL FIELD

This application relates to the field of communication technologies, and in particular, to the field of short-range communication technologies, for example, communication in scenarios such as a smart car, a smart home, a smart terminal, and smart manufacturing. Specifically, this application relates to a ranging method and a related apparatus.

### BACKGROUND

With continuous development of communication technologies, smart application scenarios such as a smart home, a smart cockpit, smart driving, smart manufacturing, and smart transportation emerge. In a communication scenario, a process of determining a distance and/or a position of a communication device within a network may be involved in either communication implementation and stable network connection or a specific application scenario.

A manner in which communication devices transmit measurement signals to implement ranging and/or positioning is an important means for resolving a ranging/positioning problem. For example, two nodes in a vehicle may send measurement signals to each other, and obtain a measurement result based on the measurement signals, to obtain a distance between the two nodes. However, while enjoying convenience brought by communication ranging, people also face threats of security vulnerabilities and privacy leakage. For example, an attacker may communicate and interact with a node by sending a measurement signal, resulting in a threat to node security. For another example, an attacker may send or listen to a measurement signal to obtain the measurement signal and calculate a distance between the attacker and a peer end.

In conclusion, how to implement secure ranging is an urgent problem to be resolved.

### SUMMARY

Embodiments of this application provide a ranging method and a related apparatus, to implement secure position information measurement and improve communication security.

**According to a first aspect,** an embodiment of this application provides a ranging method, including:
determining a first security parameter based on a plurality of input parameters, where the plurality of input parameters include a first random number and a first communication parameter;
obtaining a second measurement sequence based on the first security parameter and a first measurement sequence; and
sending a first security measurement signal, where the first security measurement signal is associated with the second measurement sequence, and the first security measurement signal is used for position information measurement.

Position information measurement may include one or more of ranging, angle measurement, positioning, or the like. Optionally, the method is applied to a first node, for example, implemented by using a chip or a software unit in the first node.

In this embodiment of this application, when a measurement signal is sent, the measurement signal is processed based on a random number and a communication parameter to obtain a security measurement signal, and the security measurement signal is sent to complete a position information measurement (or referred to as position measurement for short) process. On one hand, the random number is random and is difficult to crack. On the other hand, the communication parameter changes at any time in a communication process. For example, a time unit and a frequency unit change as transmission proceeds, and are also difficult to crack. The measurement signal is processed by using the random number and the communication parameter, so that difficulty in cracking the measurement signal is greatly increased, thereby implementing secure position measurement, and improving communication security.

In addition, communication parameters can change consistently without a communication connection (which is a communication connection for transmitting service data) between the first node and a second node, thereby reducing connection establishment steps in a position measurement procedure, reducing complexity of position measurement, and improving universality of the position measurement process. The method is also applicable to position measurement in a plurality of indirect connection cases.

**In a possible implementation of the first aspect,** the first communication parameter is related to one or more of the following information:
a sequence number of a first OFDM symbol, a number of a first time unit, or a number of a first frequency unit, where the first OFDM symbol carries the first security measurement signal, the first time unit includes the first OFDM symbol, and the first frequency unit includes a frequency resource used for transmitting the first security measurement signal.

In the foregoing implementation, the communication parameter is related to a sequence number of a symbol, a number of a time unit, and a number of a frequency unit. Because the foregoing information changes with a change of communication, the first communication parameter can be updated with the communication parameter, thereby greatly increasing difficulty in cracking the first communication parameter, and improving security of the position measurement process.

**In another possible implementation of the first aspect,** the first time unit is included in a plurality of consecutive time units; based on a preset frequency unit number sequence for transmission, frequency hopping transmission is performed on a signal carried in the plurality of consecutive time units; and the number of the first frequency unit belongs to the preset frequency unit number sequence.

In the foregoing implementation, frequency hopping transmission can be performed on the signal during transmission. This can increase a transmission bandwidth, and improve transmission efficiency. Because the first communication parameter is related to the number of the frequency unit, frequency hopping transmission can increase a change frequency of the frequency number, thereby increasing difficulty in cracking the first communication parameter and improving security. The solution in this application is applicable to frequency hopping transmission. To be specific, security can be improved, and accuracy of position measurement can be also improved by performing position measurement through frequency hopping transmission.

**In still another possible implementation of the first aspect,** the first communication parameter is associated with a position of a first OFDM symbol relative to a second OFDM symbol, the first OFDM symbol carries the first security measurement signal, the second OFDM symbol carries a second security measurement signal, and the first communication parameter corresponding to the second security measurement signal is a preset value.

In this implementation, the first communication parameter has different values in different symbols, and the values are correlated. Therefore, if a first communication parameter needs to be cracked, a preset value of the first communication parameter needs to be first obtained. Because a parameter that has been sent is difficult to crack, difficulty in cracking the first communication parameter can be increased, and security can be improved.

**In still another possible implementation of the first aspect,** obtaining the second measurement sequence based on the first security parameter and the first measurement sequence includes:
scrambling the first measurement sequence by using the first security parameter, to obtain the second measurement sequence.

**In still another possible implementation of the first aspect,** obtaining the second measurement sequence based on the first security parameter and the first measurement sequence includes:
performing exclusive OR on the first security parameter and the first measurement sequence, to obtain the second measurement sequence.

**In still another possible implementation of the first aspect,** determining the first security parameter based on the plurality of input parameters includes:
obtaining N bit sequences based on the plurality of input parameters, where the N bit sequences include the first security parameter, N is an integer, and N≥1.

In this implementation, the first security parameter is obtained based on one or more bit sequences. This can improve flexibility of a bit length of the first security parameter, and is applicable to security processing, for example, encryption or scrambling, on a measurement signal in a plurality of modulation schemes and a plurality of carrier widths.

In a possible implementation, when a required length of the first security parameter is small, some bits can be intercepted from the bit sequence to obtain the first security parameter; or when a required length of the first security parameter is large, the first security parameter can be obtained by splicing a plurality of sequences.

**In still another possible implementation of the first aspect,** when N is greater than 1, the plurality of input parameters further include a fresh parameter; and obtaining the N bit sequences based on the plurality of input parameters includes:
obtaining the N bit sequences based on the first random number, the first communication parameter, and the fresh parameter, where the fresh parameter is updated each time after one of the N bit sequences is obtained.

In this implementation, the fresh parameter is updated, so that the input parameters used to generate different bit sequences are different, and the generated security parameter is more difficult to crack, thereby improving security.

**In still another possible implementation of the first aspect,** a fresh parameter corresponding to a first bit sequence in the N bit sequences is a preset value, a fresh parameter corresponding to a second bit sequence in the N bit sequences is associated with the preset value and a sequence number of the second bit sequence, and the second bit sequence is different from the first bit sequence.

**In still another possible implementation of the first aspect,** when N is greater than 1, obtaining the N bit sequences based on the plurality of input parameters includes:
obtaining a 1^{st} bit sequence in the N bit sequences based on the plurality of input parameters; and
obtaining an I^{th} bit sequence based on the plurality of input parameters and an (I-1)^{th} bit sequence, where I is an integer, and N≥I≥2.

In this implementation, the input parameters of the N bit sequences can be different, so that different bit sequences are obtained, thereby improving security.

**In still another possible implementation of the first aspect,** the first security measurement signal includes a plurality of measurement subsignals, and the plurality of measurement subsignals are sent via a plurality of antennas;
the first measurement sequence includes a plurality of first subsequences, the plurality of subsequences respectively generate a plurality of second subsequences by using different parts of the first security parameter, and the plurality of second subsequences belong to the second measurement sequence; and
each measurement subsignal corresponds to one of the plurality of second subsequences.

In this implementation, the plurality of measurement signals are respectively sent via the plurality of antennas, and the plurality of measurement signals share the first security parameter. However, each measurement signal may use a different part of the first security parameter. For example, a measurement signal sent via an antenna 1 uses 0 to 76 bits, a measurement signal sent via an antenna 2 uses 77 to 152 bits, and the others can be deduced by analogy.

Certainly, the plurality of measurement signals sent via the plurality of antennas may alternatively use a same part of the security parameter, or different parts used by the plurality of measurement signals may overlap. This application is also applicable to these cases.

This implementation is applicable to the multi-antenna first node, and can implement secure position measurement by using a multiple-input multiple-output (Multiple-Input Multiple-Output, MIMO) technology, thereby improving space resource utilization and position measurement efficiency.

**In still another possible implementation of the first aspect,** the method is applied to the first node, and the method further includes:
sending the first security measurement signal to the second node, where the first security measurement signal is used to measure a distance between the first node and the second node.

**In still another possible implementation of the first aspect,** the first random number is determined by the first node, and the method further includes:
sending the first random number to the second node.

**In still another possible implementation of the first aspect,** the method further includes:
receiving the first random number from the second node.

**In still another possible implementation of the first aspect,** the first random number is determined by the first node, and the method further includes:
sending the first random number to a third node.

**In still another possible implementation of the first aspect,** the method further includes:
receiving a communication address of the second node from the third node.

**In still another possible implementation of the first aspect,** the third node is a node that sends data scheduling information, and the first node is a node that receives and/or sends data based on the data scheduling information.

**In still another possible implementation of the first aspect,** the first communication parameter is from a grant node, and the grant node is a node that sends data scheduling information.

Optionally, the first node is a grant node, or the third node is a grant node, or the second node is a grant node.

**In still another possible implementation of the first aspect,** the first measurement sequence is a pseudo-random sequence.

**In still another possible implementation of the first aspect,** the plurality of input parameters further include indication information, and the indication information indicates at least one of the plurality of antennas; and
the first security measurement signal is transmitted via the at least one antenna.

This implementation is applicable to the multi-antenna first node, and can implement secure position measurement by using the multiple-input multiple-output (Multiple-Input Multiple-Output, MIMO) technology, thereby improving space resource utilization and position measurement efficiency.

**According to a second aspect,** an embodiment of this application provides a ranging method, including:
determining a first security parameter based on a plurality of input parameters, where the plurality of input parameters include a first random number and a first communication parameter;
receiving a first security measurement signal, where the first security measurement signal is associated with a second measurement sequence, and the first security measurement signal is used for position information measurement; and
obtaining a first measurement sequence based on the first security parameter and the first security measurement signal.

**In a possible implementation of the second aspect,** the first communication parameter is related to one or more of the following information:
a sequence number of a first OFDM symbol, a number of a first time unit, or a number of a first frequency unit, where the first OFDM symbol carries the first security measurement signal, the first time unit includes the first OFDM symbol, and the first frequency unit includes a frequency resource used for transmitting the first security measurement signal.

**In another possible implementation of the second aspect,** the first time unit is included in a plurality of consecutive time units; based on a preset frequency unit number sequence for transmission, frequency hopping transmission is performed on a signal carried in the plurality of consecutive time units; and the number of the first frequency unit belongs to the preset frequency unit number sequence.

**In still another possible implementation of the second aspect,** the first communication parameter is associated with a position of a first OFDM symbol relative to a second OFDM symbol, the first OFDM symbol carries the first security measurement signal, the second OFDM symbol carries a second security measurement signal, and the first communication parameter corresponding to the second security measurement signal is a preset value.

**In still another possible implementation of the second aspect,** obtaining the first measurement sequence based on the first security parameter and the first security measurement signal includes:
descrambling the second measurement sequence by using the first security parameter, to obtain the first measurement sequence.

**In still another possible implementation of the second aspect,** obtaining the first measurement sequence based on the first security parameter and the first security measurement signal includes:
performing exclusive OR on the first security parameter and the second measurement sequence, to obtain the first measurement sequence.

**In still another possible implementation of the second aspect,** determining the first security parameter based on the plurality of input parameters includes:
obtaining N bit sequences based on the plurality of input parameters, where the N bit sequences include the first security parameter, N is an integer, and N≥1.

**In still another possible implementation of the second aspect,** when N is greater than 1, the plurality of input parameters further include a fresh parameter; and obtaining the N bit sequences based on the plurality of input parameters includes:
obtaining the N bit sequences based on the first random number, the first communication parameter, and the fresh parameter, where the fresh parameter is updated each time after one of the N bit sequences is obtained.

**In still another possible implementation of the second aspect,** a fresh parameter corresponding to a first bit sequence in the N bit sequences is a preset value, a fresh parameter corresponding to a second bit sequence in the N bit sequences is associated with the preset value and a sequence number of the second bit sequence, and the second bit sequence is different from the first bit sequence.

**In still another possible implementation of the second aspect,** when N is greater than 1, obtaining the N bit sequences based on the plurality of input parameters includes:
obtaining a 1^{st} bit sequence in the N bit sequences based on the plurality of input parameters; and
obtaining an I^{th} bit sequence based on the plurality of input parameters and an (I-1)^{th} bit sequence, where I is an integer, and N≥I≥2.

**In still another possible implementation of the second aspect,** the first security measurement signal includes a plurality of measurement subsignals, and the plurality of measurement subsignals are sent via a plurality of antennas of a first node and are respectively received via a plurality of antennas of a second node;
the first measurement sequence includes a plurality of first subsequences, the plurality of subsequences respectively generate a plurality of second subsequences by using different parts of the first security parameter, and the plurality of second subsequences belong to the second measurement sequence; and
each measurement subsignal corresponds to one of the plurality of second subsequences.

**In still another possible implementation of the second aspect,** the method further includes:
receiving the first random number from the first node.

**In still another possible implementation of the second aspect,** the method further includes:
determining the first random number; and
sending the first random number to the first node.

**In still another possible implementation of the second aspect,** the method further includes:
receiving the first random number sent by a third node, where the first random number is from the first node.

**In still another possible implementation of the second aspect,** the method further includes:
receiving a communication address of the first node from the third node.

**In still another possible implementation of the second aspect,** the third node is a node that sends data scheduling information, and the first node is a node that receives and/or sends data based on the data scheduling information.

**In still another possible implementation of the second aspect,** the first communication parameter is from a grant node, and the grant node is a node that sends data scheduling information.

**In still another possible implementation of the second aspect,** the first measurement sequence is a pseudo-random sequence.

**In still another possible implementation of the second aspect,** the plurality of input parameters further include indication information, the indication information indicates at least one of the plurality of antennas, and the first security measurement signal is transmitted via the at least one antenna.

**According to a third aspect,** an embodiment of this application provides a communication apparatus, including a processing unit and a communication unit. The communication apparatus is configured to implement the ranging method according to any one of the implementations of the first aspect.

Optionally, the communication apparatus may be included in a first node.

**In a possible implementation of the third aspect,** the processing unit is configured to determine a first security parameter based on a plurality of input parameters, where the plurality of input parameters include a first random number and a first communication parameter;
the processing unit is further configured to obtain a second measurement sequence based on the first security parameter and a first measurement sequence; and
the communication unit is configured to send a first security measurement signal, where the first security measurement signal is associated with the second measurement sequence, and the first security measurement signal is used for position information measurement.

**In another possible implementation of the third aspect,** the first communication parameter is related to one or more of the following information:
a sequence number of a first OFDM symbol, a number of a first time unit, or a number of a first frequency unit, where the first OFDM symbol carries the first security measurement signal, the first time unit includes the first OFDM symbol, and the first frequency unit includes a frequency resource used for transmitting the first security measurement signal.

**In still another possible implementation of the third aspect,** the first time unit is included in a plurality of consecutive time units; based on a preset frequency unit number sequence for transmission, frequency hopping transmission is performed on a signal carried in the plurality of consecutive time units; and the number of the first frequency unit belongs to the preset frequency unit number sequence.

**In still another possible implementation of the third aspect,** the first communication parameter is associated with a position of a first OFDM symbol relative to a second OFDM symbol, the first OFDM symbol carries the first security measurement signal, the second OFDM symbol carries a second security measurement signal, and the first communication parameter corresponding to the second security measurement signal is a preset value.

**In still another possible implementation of the third aspect,** the processing unit is further configured to scramble the first measurement sequence by using the first security parameter, to obtain the second measurement sequence.

**In still another possible implementation of the third aspect,** the processing unit is further configured to perform exclusive OR on the first security parameter and the first measurement sequence, to obtain the second measurement sequence.

**In still another possible implementation of the third aspect,** the processing unit is further configured to:
obtain N bit sequences based on the plurality of input parameters, where the N bit sequences include the first security parameter, N is an integer, and N≥1.

**In still another possible implementation of the third aspect,** when N is greater than 1, the plurality of input parameters further include a fresh parameter; and the processing unit is further configured to:
obtain the N bit sequences based on the first random number, the first communication parameter, and the fresh parameter, where the fresh parameter is updated each time after one of the N bit sequences is obtained.

**In still another possible implementation of the third aspect,** a fresh parameter corresponding to a first bit sequence in the N bit sequences is a preset value, a fresh parameter corresponding to a second bit sequence in the N bit sequences is associated with the preset value and a sequence number of the second bit sequence, and the second bit sequence is different from the first bit sequence.

**In still another possible implementation of the third aspect,** when N is greater than 1, the processing unit is further configured to:
obtain a 1^{st} bit sequence in the N bit sequences based on the plurality of input parameters; and
obtain an I^{th} bit sequence based on the plurality of input parameters and an (I-1)^{th} bit sequence, where I is an integer, and N≥I≥2.

**In still another possible implementation of the third aspect,** the first security measurement signal includes a plurality of measurement subsignals, and the plurality of measurement subsignals are sent via a plurality of antennas;
the first measurement sequence includes a plurality of first subsequences, the plurality of subsequences respectively generate a plurality of second subsequences by using different parts of the first security parameter, and the plurality of second subsequences belong to the second measurement sequence; and
each measurement subsignal corresponds to one of the plurality of second subsequences.

**In still another possible implementation of the third aspect,** the communication unit is further configured to send the first security measurement signal to a second node, where the first security measurement signal is used to measure a distance between the first node and the second node.

**In still another possible implementation of the third aspect,** the first random number is determined by the first node; and the communication unit is further configured to send the first random number to the second node.

In still another possible implementation of the third aspect, the communication unit is further configured to receive the first random number from the second node.

**In still another possible implementation of the third aspect,** the first random number is determined by the first node; and the communication unit is further configured to send the first random number to a third node.

**In still another possible implementation of the third aspect,** the communication unit is further configured to receive a communication address of the second node from the third node.

**In still another possible implementation of the third aspect,** the third node is a node that sends data scheduling information, and the first node is a node that receives and/or sends data based on the data scheduling information.

**In still another possible implementation of the third aspect,** the first communication parameter is from a grant node, and the grant node is a node that sends data scheduling information.

Optionally, the first node is a grant node, or the third node is a grant node, or the second node is a grant node.

**In still another possible implementation of the third aspect,** the first measurement sequence is a pseudo-random sequence.

**In still another possible implementation of the third aspect,** the plurality of input parameters further include indication information, the indication information indicates at least one of the plurality of antennas, and the first security measurement signal is transmitted via the at least one antenna.

**According to a fourth aspect,** an embodiment of this application provides a communication apparatus, including a processing unit and a communication unit. The communication apparatus is configured to implement the ranging method according to any one of the implementations of the second aspect.

Optionally, the communication apparatus may be included in a second node.

**In a possible implementation of the fourth aspect,** the processing unit is configured to determine a first security parameter based on a plurality of input parameters, where the plurality of input parameters include a first random number and a first communication parameter;
the communication unit is configured to receive a first security measurement signal, where the first security measurement signal is associated with a second measurement sequence, and the first security measurement signal is used for position information measurement; and
the processing unit is further configured to obtain a first measurement sequence based on the first security parameter and the first security measurement signal.

**In another possible implementation of the fourth aspect,** the first communication parameter is related to one or more of the following information:
a sequence number of a first OFDM symbol, a number of a first time unit, or a number of a first frequency unit, where the first OFDM symbol carries the first security measurement signal, the first time unit includes the first OFDM symbol, and the first frequency unit includes a frequency resource used for transmitting the first security measurement signal.

**In still another possible implementation of the fourth aspect,** the first time unit is included in a plurality of consecutive time units; based on a preset frequency unit number sequence for transmission, frequency hopping transmission is performed on a signal carried in the plurality of consecutive time units; and the number of the first frequency unit belongs to the preset frequency unit number sequence.

**In still another possible implementation of the fourth aspect,** the first communication parameter is associated with a position of a first OFDM symbol relative to a second OFDM symbol, the first OFDM symbol carries the first security measurement signal, the second OFDM symbol carries a second security measurement signal, and the first communication parameter corresponding to the second security measurement signal is a preset value.

**In still another possible implementation of the fourth aspect,** the processing unit is further configured to descramble the second measurement sequence by using the first security parameter, to obtain the first measurement sequence.

**In still another possible implementation of the fourth aspect,** the processing unit is further configured to perform exclusive OR on the first security parameter and the second measurement sequence, to obtain the first measurement sequence.

**In still another possible implementation of the fourth aspect,** the processing unit is further configured to:
obtain N bit sequences based on the plurality of input parameters, where the N bit sequences include the first security parameter, N is an integer, and N≥1.

**In still another possible implementation of the fourth aspect,** when N is greater than 1, the plurality of input parameters further include a fresh parameter; and the processing unit is further configured to obtain the N bit sequences based on the first random number, the first communication parameter, and the fresh parameter, where the fresh parameter is updated each time after one of the N bit sequences is obtained.

**In still another possible implementation of the fourth aspect,** a fresh parameter corresponding to a first bit sequence in the N bit sequences is a preset value, a fresh parameter corresponding to a second bit sequence in the N bit sequences is associated with the preset value and a sequence number of the second bit sequence, and the second bit sequence is different from the first bit sequence.

**In still another possible implementation of the fourth aspect,** when N is greater than 1, the processing unit is further configured to:
obtain a 1^{st} bit sequence in the N bit sequences based on the plurality of input parameters; and
obtain an I^{th} bit sequence based on the plurality of input parameters and an (I-1)^{th} bit sequence, where I is an integer, and N≥I≥2.

**In still another possible implementation of the fourth aspect,** the first security measurement signal includes a plurality of measurement subsignals, and the plurality of measurement subsignals are sent via a plurality of antennas of a first node and are respectively received via a plurality of antennas of the second node;
the first measurement sequence includes a plurality of first subsequences, the plurality of subsequences respectively generate a plurality of second subsequences by using different parts of the first security parameter, and the plurality of second subsequences belong to the second measurement sequence; and
each measurement subsignal corresponds to one of the plurality of second subsequences.

**In still another possible implementation of the fourth aspect,** the communication unit is further configured to receive the first random number from the first node.

**In still another possible implementation of the fourth aspect,** the processing unit is further configured to determine the first random number; and
the communication unit is further configured to send the first random number to the first node.

**In still another possible implementation of the fourth aspect,** the communication unit is further configured to receive the first random number sent by a third node, where the first random number is from the first node.

**In still another possible implementation of the fourth aspect,** the communication unit is further configured to receive a communication address of the first node from the third node.

**In still another possible implementation of the fourth aspect,** the third node is a node that sends data scheduling information, and the first node is a node that receives and/or sends data based on the data scheduling information.

**In still another possible implementation of the fourth aspect,** the first communication parameter is from a grant node, and the grant node is a node that sends data scheduling information.

**In still another possible implementation of the fourth aspect,** the first measurement sequence is a pseudo-random sequence.

**In still another possible implementation of the fourth aspect,** the plurality of input parameters further include indication information, the indication information indicates at least one of the plurality of antennas, and the first security measurement signal is transmitted via the at least one antenna.

**According to a fifth aspect,** an embodiment of this application provides a communication apparatus. The communication apparatus includes a processor. When the processor invokes a computer program or instructions in a memory, the method according to any one of the implementations of the first aspect is performed, or the method according to any one of the implementations of the second aspect is performed.

Optionally, a computing device further includes a communication interface. The communication interface is configured to receive and/or send data, and/or the communication interface is configured to provide an input and/or an output for the processor.

It should be noted that, in the foregoing embodiment, an example in which the processor (or referred to as a general-purpose processor) that perform the method by invoking the computer instructions are used for description. In a specific implementation process, the processor may alternatively be a dedicated processor. In this case, the computer instructions are already preloaded on the processor. Optionally, the processor may alternatively include both a dedicated processor and a general-purpose processor.

Optionally, the communication apparatus may further include a memory, and the memory may be configured to store a computer program or instructions. Further, the memory may be located outside the processor, or the processor is integrated with the memory.

**According to a sixth aspect,** an embodiment of this application provides a chip. The chip includes a processor. When the processor invokes a computer program or instructions in a memory, the method according to any one of the implementations of the first aspect is performed, or the method according to any one of the implementations of the second aspect is performed.

Optionally, the chip further includes a communication interface. The communication interface is configured to receive and/or send data, and/or the communication interface is configured to provide an input and/or an output for the processor.

Optionally, the chip may further include a memory, and the memory may be configured to store a computer program or instructions. Further, the memory may be located outside the processor, or the processor is integrated with the memory.

**According to a seventh aspect,** an embodiment of this application provides a communication system. The communication system includes a first node and a second node, where
the first node includes the communication apparatus according to any one of the implementations of the third aspect; and
the second node includes the communication apparatus according to any one of the implementations of the fourth aspect.

Optionally, the communication system further includes a grant node, and the grant node is communicatively connected to the first node and the second node.

**According to an eighth aspect,** an embodiment of this application provides a terminal. The terminal includes the communication apparatus according to any one of the implementations of the third aspect, or includes the communication apparatus according to any one of the implementations of the fourth aspect, or includes the communication apparatus according to any one of the implementations of the fifth aspect, or includes the chip according to any one of the implementations of the sixth aspect, or includes the communication system according to any one of the implementations of the seventh aspects.

Optionally, the terminal may be a smart terminal or a transportation means like a vehicle, an uncrewed aerial vehicle, or a robot.

**According to a ninth aspect,** an embodiment of this application provides a computer-readable storage medium. The computer-readable storage medium is configured to store instructions or a computer program. When the instructions or the computer program is executed, the method according to any one of the implementations of the first aspect or the method according to any one of the implementations of the second aspect is implemented.

**According to a tenth aspect,** this application provides a computer program product. The computer program product includes computer instructions or a computer program, where
when the instructions or the computer program is executed, the method according to any one of the implementations of the first aspect or the method according to any one of the implementations of the second aspect is implemented.

Optionally, the computer program product may be a software installation package or an image package. When the foregoing method needs to be used, the computer program product may be downloaded, and the computer program product is executed on a computing device.

For beneficial effect of the technical solutions provided in the second to the tenth aspects of this application, refer to beneficial effect of the technical solution in the first aspect. Details are not described herein again.

### BRIEF DESCRIPTION OF DRAWINGS

The following briefly describes accompanying drawings used in descriptions of embodiments.
FIG. 1 is a diagram of a time unit according to an embodiment of this application;
FIG. 2 is a diagram of a carrier signal and a subcarrier according to an embodiment of this application;
FIG. 3 is a diagram of another time unit according to an embodiment of this application;
FIG. 4 is a diagram of frequency hopping according to an embodiment of this application;
FIG. 5 is a diagram of a vehicle-mounted positioning scenario according to an embodiment of this application;
FIG. 6 is a diagram of a communication architecture according to an embodiment of this application;
FIG. 7 is a diagram of another communication architecture according to an embodiment of this application;
FIG. 8 is a diagram of a communication system according to an embodiment of this application;
FIG. 9 is a diagram of another communication system according to an embodiment of this application;
FIG. 10 is a diagram of ranging interaction according to an embodiment of this application;
FIG. 11 is a diagram of still another communication system according to an embodiment of this application;
FIG. 12 is a diagram of ranging interaction according to an embodiment of this application;
FIG. 13 is a schematic flowchart of a ranging method according to an embodiment of this application;
FIG. 14 is a diagram of first communication parameter change according to an embodiment of this application;
FIG. 15 is a diagram of bit sequence allocation according to an embodiment of this application;
FIG. 16 is a schematic flowchart of another ranging method according to an embodiment of this application;
FIG. 17 is a schematic flowchart of still another ranging method according to an embodiment of this application;
FIG. 18 is a schematic flowchart of still another ranging method according to an embodiment of this application;
FIG. 19 is a schematic flowchart of still another ranging method according to an embodiment of this application;
FIG. 20 is a schematic flowchart of still another ranging method according to an embodiment of this application;
FIG. 21 is a schematic flowchart of still another ranging method according to an embodiment of this application;
FIG. 22 is a schematic flowchart of still another ranging method according to an embodiment of this application;
FIG. 23 is a schematic flowchart of still another ranging method according to an embodiment of this application;
FIG. 24 is a schematic flowchart of still another ranging method according to an embodiment of this application;
FIG. 25 is a schematic flowchart of still another ranging method according to an embodiment of this application;
FIG. 26 is a diagram of a structure of a communication apparatus according to an embodiment of this application; and
FIG. 27 is a diagram of a structure of another communication apparatus according to an embodiment of this application.

### DESCRIPTION OF EMBODIMENTS

To facilitate understanding of detailed implementation of solutions in embodiments of this application, the following first describes technical terms used in embodiments of this application.

### 1. Node (node)

The node is a device having a communication capability, and includes but is not limited to one or more of a terminal device, a network device, an industrial device, or an entertainment device.

The terminal device includes a handheld terminal, a wearable terminal, a transportation means, a vehicle-mounted device, a sensing device, a smart home device, and the like. The handheld terminal includes but is not limited to a mobile phone, a tablet, or a notebook computer. The wearable device includes but is not limited to headsets, smart bands, smart watches, or smart glasses. The transportation means includes but is not limited to a vehicle, a ship, aircraft, rail transport (such as a subway and a high-speed railway), or a logistics robot (such as an automated guided vehicle (automated guided vehicle, AGV)). The vehicle-mounted device includes but is not limited to a domain controller (domain controller, DC), a screen, a microphone, a speaker, an electronic key, keyless entry, a startup system controller, a battery management system (battery management system, BMS), a battery pack, or a cell. The sensing device includes but is not limited to a camera, a radar, a lidar, an illumination sensor, a temperature sensor, or a humidity sensor. The smart home device includes but is not limited to a projector, a smart television, a smart refrigerator, a smart home gateway, or a security device.

The network device includes but is not limited to a router, a switch, or a base station. The industrial device is, for example, an industrial robot and a robotic arm. The leisure and entertainment device is, for example, a virtual reality (virtual reality, VR) device, a mixed reality (Mixed Reality, MR) device, a massage chair, a home theater, a game control device, or a 4D cinema cockpit.

The node in embodiments of this application may be used in various scenarios such as a smart car, a smart home, a smart terminal, smart manufacturing, or a smart exhibition hall. In some application scenarios or some network types, a name of a device having a similar communication capability may not be referred to as a node. However, for ease of description, devices having communication capabilities are collectively referred to as nodes in embodiments of this application.

### 2. Terminal (terminal, T) node and grant (grant, G) node

In a communication system, a node includes a G node and a T node. The G node manages a specific quantity of T nodes, and the G node is connected to these T nodes to jointly complete a communication function. Management of the T nodes by the G node can be reflected in a plurality of dimensions. For example, the G node may allocate a transmission resource, configure a communication domain parameter, and the like for the T node. In a possible implementation, the G node may send data scheduling information, and the T node may receive the data scheduling information and receive/send data based on the data scheduling information. A link over which the G node sends a signal to another node (for example, the T node) is referred to as a G link, and a link over which the T node sends a signal to another node (for example, the G node) is referred to as a T link.

In some possible implementations, the G node and the T node connected to the G node belong to a communication domain. Optionally, there may be one or more G nodes in a communication domain. For example, a single G node and a T node connected to the G node jointly form a communication domain.

### 3. Computing node

The computing node is a node that calculates position information (including ranging, angle measurement, and positioning) based on a measurement result reported by a node. Aranging calculation result includes one or more of a distance between a to-be-measured node and an anchor, a position of the to-be-measured node, an angle of the to-be-measured node, or the like.

### 4. Fresh parameter

The fresh parameter is a parameter in the field of information security, is used to generate a secret value, an authentication code, and the like, and may also be referred to as freshness. The fresh parameter includes one or more of a random number, a count value (counter), a serial number (serial number), a sequence number (sequence number), and the like. A non-repeated random number (number once, NONCE) is a (non-repeated) random number that is used only once.

Fresh parameters generated at different moments are usually different. In some scenarios, a value of the fresh parameter changes each time the fresh parameter is generated, so that a fresh parameter used to generate a secret value this time is different from a fresh parameter used to generate a secret value last time. This can improve security of generated secret values.

### 5. Derivation algorithm

The derivation algorithm (or referred to as a derivation algorithm) is used to obtain one or more derived values from one or more secret values, to implement derivation of the secret value. The derivation algorithm may include one or more of a hash algorithm, a message authentication code, a key derivation algorithm (key derivation function, KDF), an algorithm, and the like. In some embodiments of this application, the KDF is used as an example to illustrate the derivation algorithm, and is not intended to limit a derivation algorithm to be used.

For example, the derivation algorithm includes but is not limited to a hash-based message authentication code-Chinese cryptographic algorithm 3 (Hash-based Message Authentication Code-SM3, HMAC-SM3), a hash-based message authentication code-secure hash algorithm (Hash-based Message Authentication Code-Secure Hash Algorithm, HMAC-SHA), a password-based key derivation function (password-based key derivation function, PBKDF), and a scrypt (scrypt) algorithm. Optionally, the secure hash algorithm may be SHA-224, SHA-256, SHA-384 or SHA-512. When the secure hash algorithm is SHA-256, HMAC-SHA may alternatively be referred to as HMAC-SHA256. Similarly, when the secure hash algorithm is SHA-224, HMAC-SHA may alternatively be referred to as HMAC-SHA224. Similar name replacement may also be performed on other hash algorithms, and examples are not provided one by one herein. Optionally, the PBKDF algorithm further includes a first-generation PBKDF 1 and a second-generation PBKDF 2.

### 6. Time unit

The time unit is a concept in time domain. A unit of the time unit may be a super frame, a radio frame (radio frame), a symbol (symbol), a mini-slot (mini-slot), a slot (slot), a subframe, a symbol, or the like. The super frame is a time unit including a plurality of radio frames, the radio frame is a time unit smaller than the super frame, and the symbol is a time unit smaller than the radio frame.

The super frame includes one or more radio frames, and the radio frame includes one or more symbols. The symbol may be, for example, an orthogonal frequency division multiplexing (orthogonal frequency-division multiplexing, OFDM) symbol. For example, the SparkLink basic (SparkLink basic, SLB) standard related to SparkLink Alliance specifies frame structures of the super frame and the radio frame. A super frame period is 1 millisecond (ms), that is, duration of a super frame is 1 ms. One super frame includes 48 radio frames, and duration of each radio frame is 1/48=20.833 microseconds (µs).

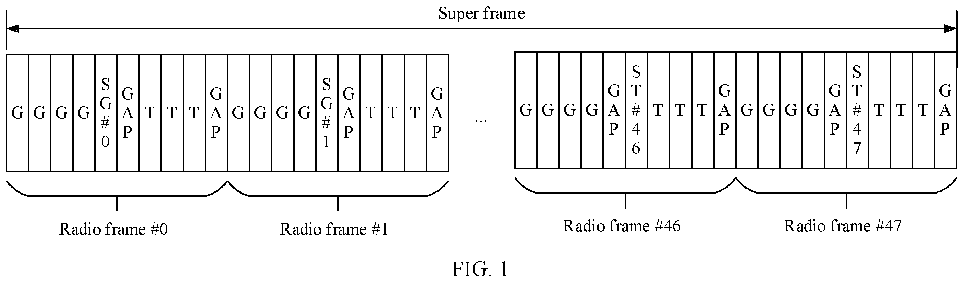

FIG. 1 is a diagram of a time unit according to an embodiment of this application. One super frame includes 48 radio frames, and numbers of the 48 radio frames are sequentially a radio frame #0 to a radio frame #47. Each radio frame includes one or more of several downlink symbols, several uplink symbols, an overhead symbol, a switching gap (gap, GAP), and the like. The downlink symbol is used for downlink transmission, and the uplink symbol is used for uplink transmission. The overhead symbol may also be described as a flexible symbol, a specific symbol, or the like, and is used for synchronization, channel sounding, downlink control information (downlink control information, DCI) transmission, and the like. The overhead symbol may be classified into a downlink overhead symbol and an uplink overhead symbol. The switching gap is used for uplink/downlink switching. Duration of one switching gap in a radio frame is, for example, duration of one symbol in the radio frame, and duration of one downlink symbol=duration of one uplink symbol=duration of one overhead symbol.

For example, in a vehicle-mounted (or non-vehicle-mounted) wireless short-range communication system, an uplink usually refers to a direction in which a T node sends data or information to a G node, and may be represented by "T". A downlink usually refers to a direction in which the G node sends data or information to the T node, and may be represented by "G". In FIG. 1, the downlink symbol is represented as a G symbol, and the G symbol may also be described as a G link symbol or the like. The uplink symbol is represented as a T symbol, and the T symbol is also described as a T link symbol or the like.

In the vehicle-mounted wireless short-range communication system, there is usually a communication requirement between different T nodes or between different G nodes. Therefore, communication between the different T nodes or between the different G nodes may occupy the foregoing overhead symbol, or a signal sent by the G node occupies the G symbol, and a signal sent by the T node occupies the T symbol.

In FIG. 1, the downlink overhead symbol is represented as a special grant (special grant, SG) symbol, and the uplink overhead symbol is represented as a special terminal (special terminal, ST) symbol.

### 7. Sequence number of a time unit

The sequence number of the time unit may change (for example, accumulate) from a preset value (for example, 0), and a sequence number of a next time unit is different from a sequence number of a current time unit. Further, when the sequence number of the time unit reaches a threshold (for example, is equal to the threshold), the sequence number is reversed, and counting starts from the preset value again. The preset value may be preconfigured, indicated by higher layer signaling, or specified in a protocol. For example, according to a protocol, a sequence number of a time unit starts from 0 and sequentially increments, is reversed when the sequence number changes to a maximum value, and continues to sequentially increment after the sequence number returns back to 0.

Optionally, when the time unit is a symbol, a radio frame, or a super frame, the sequence number of the time unit may be represented by using a plurality of bits.

### 8. Frequency unit

The frequency unit is a concept in frequency domain. A unit of the frequency unit may be a subcarrier (subcarrier), a carrier channel, a carrier channel group, or the like.

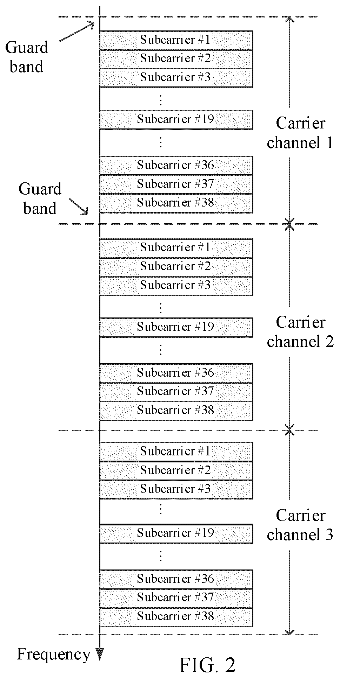

FIG. 2 is a diagram of a carrier signal and a subcarrier according to an embodiment of this application. In a possible example, a physical bandwidth of a carrier channel (or referred to as a carrier for short) may be predefined, for example, 20 MHz or 40 MHz. One carrier channel includes a plurality of subcarriers. As shown in FIG. 2, one carrier channel includes 39 consecutive subcarriers, and the 39 subcarriers are sequentially numbered #0, #1, ..., and #38 in ascending order of corresponding frequencies, where the subcarrier #19 is a direct current (direct current, DC) subcarrier, and the 38 subcarriers other than the DC subcarrier are referred to as valid subcarriers.

A node may operate on a plurality of carrier channels, and the plurality of carrier channels may be aggregated to form a carrier channel group. For example, the carrier channel group may include a carrier channel 1, a carrier signal 2, and a carrier channel 3 shown in FIG. 2. When an original bandwidth of the carrier channel is 20 MHz, the carrier channel group formed by the three carrier channels may have a bandwidth of 60 MHz.

In this specification, for ease of description, the carrier channel is referred to as a channel for short in some embodiments, and terms "channel" and "carrier channel" are interchangeable.

In addition, a number of the frequency unit is an identifier indicating the frequency unit, or may be replaced with a center frequency, a start frequency, or the like of the frequency unit. For example, when the frequency unit is a carrier, the number of the frequency unit may be a carrier channel number.

### 9. OFDM

The OFDM technology is a multi-carrier frequency division multiplexing (frequency division multiplexing, FDM) technology, and a plurality of carriers (carrier) operate at the same time. These carriers may be referred to as subcarriers in the FDM technology. The OFDM technology is also referred to as a discrete multitone modulation (discrete multitone modulation, DMT) technology, has a high-rate transmission capability, and can effectively resist frequency selective fading. In OFDM, a plurality of subcarriers are orthogonal, which is referred to as orthogonal frequency division multiplexing. From a perspective of a spectrum, each subcarrier uses a frequency of the subcarrier as a center frequency, and occupies a specific frequency band width.

OFDM can flexibly change an operating bandwidth by adjusting a quantity of subcarriers. This meets a requirement for a large bandwidth and has better capacity expansion effect.

### 10. Frequency hopping

Frequency hopping means that a device switches a center frequency of a sent signal by changing a center frequency of a radio frequency channel of a node (for example, changing a carrier frequency of a local-frequency signal) or changing a center frequency of a generated sent signal in a digital manner. Frequency hopping may be frequency hopping based on an OFDM signal.

OFDM frequency hopping is defined as switching a DC subcarrier of an OFDM symbol from a center frequency of one carrier channel to a center frequency of another carrier channel. Frequency hopping switching of a single carrier indicates switching a DC subcarrier from one carrier channel to another carrier channel. Frequency hopping switching of a plurality of carriers indicates switching from a carrier channel group corresponding to the plurality of carriers to another carrier channel group. For example, a G node and a T node originally operate on carrier channel groups 1 to 3, and switch to carrier channel groups 4 to 6 after frequency hopping. The carrier channel groups 1 to 3 are referred to as initial carrier channel groups or initial channel groups, and the carrier channel groups 4 to 6 are referred to as frequency hopping carrier channel groups or frequency hopping channel groups.

In this application, frequency hopping manners of different nodes may be the same (for example, both are radio frequency hopping or digital frequency hopping), or may be different (for example, a frequency hopping manner of a first node is radio frequency hopping, and a frequency hopping manner of a second node is digital frequency hopping). This is not limited in this application.

### 11. Ranging

Ranging is to measure a distance between at least two nodes by sending a measurement signal between the at least two nodes. For example, a measurement signal is sent between a G node and a T node, to measure a distance between the G node and the T node. For another example, a measurement signal is sent between a G node and a T node 1, to measure a distance between the G node and the T node 1. A measurement signal is sent between the G node and a T node 2, to measure a distance between the G node and the T node 2. The T node 1 and the T node 2 send measurement signals to each other, to measure a distance between the T node 1 and the T node 2.

The measurement signal is carried in a measurement symbol, and the measurement symbol occupies specific duration in a time unit.

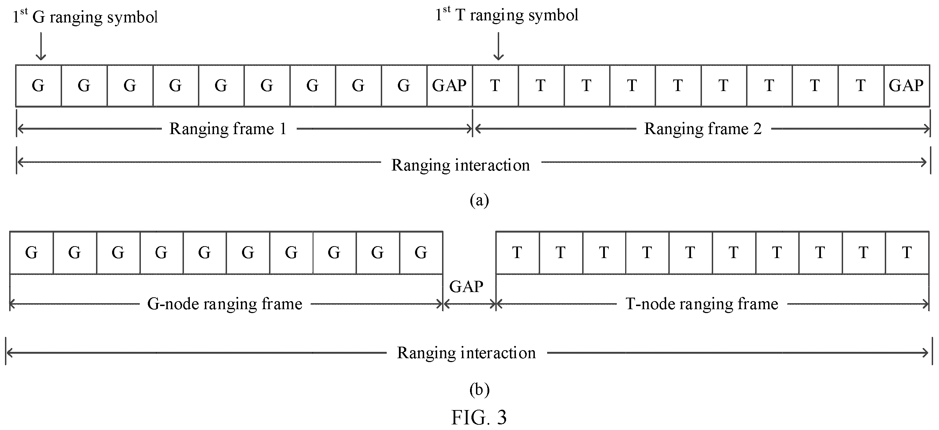

FIG. 3 is a diagram of another time unit according to an embodiment of this application. A measurement signal is carried in a G ranging symbol or a T ranging symbol. The G ranging symbol is transmitted in a ranging frame 1, and the T ranging symbol is transmitted in a ranging frame 2. The ranging frame 1 and the ranging frame 2 occupy specific duration in time domain. The ranging frame 1 includes one or more G ranging symbols, the ranging frame 2 includes one or more T ranging symbols, and GAP indicates switching between a G ranging frame and a T ranging frame.

Refer to (a) in FIG. 3. The ranging frame 1 and the ranging frame 2 each include a switching gap (GAP), and the switching gap is used to perform transmit/receive switching. Refer to (b) in FIG. 3. There is a switching gap (GAP) between the ranging frame 1 and the ranging frame 2, but GAP does not occupy duration of a radio frame 1 or duration of a radio frame 2.

In some possible implementations, the G-node ranging frame and the T-node ranging frame may be included in ranging interaction, and the ranging interaction is also a possible time unit. One or more ranging frames may be included in one time of ranging interaction.

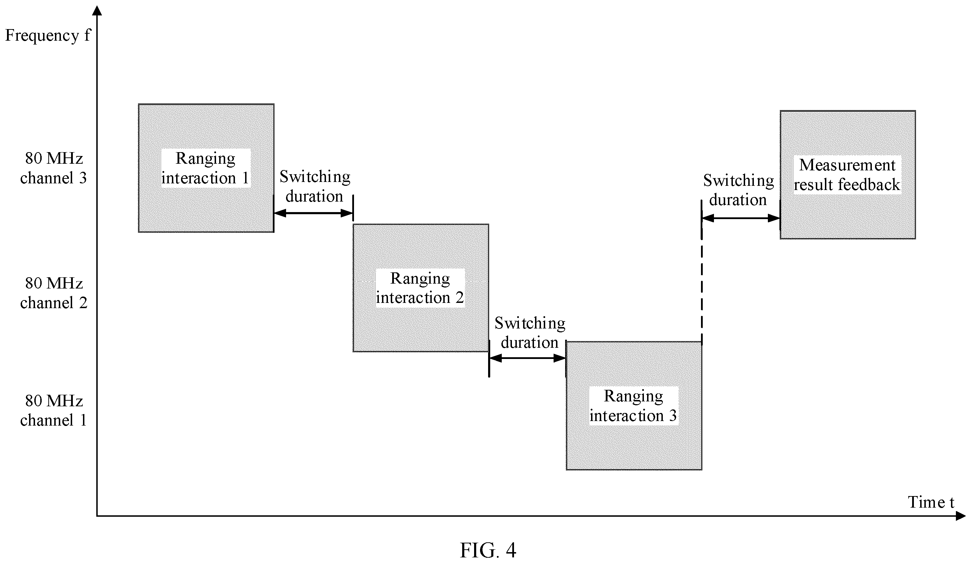

In some possible implementations, the ranging interaction may be performed through frequency hopping on a plurality of carrier channels or a plurality of carrier channel groups. FIG. 4 is a diagram of frequency hopping according to an embodiment of this application. An initial channel for frequency hopping ranging is a channel 3. After ranging interaction 1 is completed on the channel 3, ranging interaction 2 is performed on a channel 2. After the ranging interaction 2 is completed on the channel 2, ranging interaction 3 is performed on a channel 1. That is, a frequency hopping channel sequence for ranging interaction is {channel 3, channel 2, channel 1}.

Optionally, after completing the ranging interaction 1, the ranging interaction 2, and the ranging interaction 3, a first node and a second node may feed back a measurement result on the channel 3, and the measurement result fed back on the channel 3 may be obtained based on channel state information of the channel 3, the channel 2, and the channel 1.

Certainly, FIG. 4 is described by using an example in which frequency hopping is performed in a unit of ranging interaction. In a specific implementation process, frequency hopping may alternatively be performed in a unit of a radio frame, a ranging frame, or a super frame. It should be understood that, for multi-carrier frequency hopping, a signal may be transmitted only on some frequencies included in a plurality of carriers. For example, a ranging signal is transmitted only on 40 MHz in 80 MHz. In this case, a corresponding carrier channel number during frequency hopping transmission may be only for the 40 MHz used for transmission.

In addition, a frequency hopping process shown in FIG. 4 is described by using frequency hopping of multi-carrier frequency hopping (a frequency hopping channel is a carrier group obtained by aggregating a plurality of single carriers) as an example. For a case of single-carrier frequency hopping, refer to frequency hopping in FIG. 4.

It may be understood that position information measurement in this embodiment of this application includes ranging, angle measurement, positioning, sensing, and the like. In a specific implementation process, similar steps are performed to implement ranging, positioning, angle measurement, sensing, and the like. In some embodiments of this application, ranging is used as an example to describe a position information measurement process. In a specific implementation process, "ranging" may be replaced with "positioning", "angle measurement", "sensing", or the like.

### 12. Anchor and tag

The anchor, also referred to as a position anchor or a measurement node, is a node that is in nodes participating in ranging (or angle measurement or positioning) and that is used as a reference position for ranging (or angle measurement or positioning). The tag, also referred to as a measurement node, is a node that is used as a measured object in nodes participating in ranging (or angle measurement or positioning).

### 13. Measurement signal

The measurement signal is also referred to as measurement information. In some scenarios, the measurement signal may include a positioning reference signal (positioning reference signal, PRS), a demodulation reference signal (demodulation reference signal, DMRS), or the like. The PRS includes but is not limited to a channel state information reference signal (channel state information reference signal, CSI-RS), a channel sounding signal (sounding reference signal, SRS), a first training signal (first training signal, FTS), a second training signal (second training signal, STS), or the like. The CSI-RS is usually a channel state information reference signal sent by a G node, and is used by another node to measure a characteristic (namely, channel state information) of a transmission channel from the G node to the another node. The SRS is usually a channel sounding signal sent by a T node, and is used for channel characteristic (namely, channel state information) transmission from the T node to another node. The FTS is a signal used for time and frequency synchronization, specifically, for example, a signal used for time and frequency synchronization in the SparkLink basic (SparkLink Basic, SLB) standard. The FTS may also be used for channel characteristic (namely, channel state information) transmission. The STS is a signal used for time and frequency synchronization, specifically, for example, a signal used for time and frequency synchronization in the SLB standard, and may also be used for channel characteristic (that is, channel state information) transmission.

A symbol carrying the CSI-RS is referred to as a CSI-RS symbol, a symbol carrying the DMRS is referred to as a DMRS symbol, a symbol carrying the SRS is referred to as an SRS symbol, a symbol carrying the FTS is referred to as an FTS symbol, and a symbol carrying the STS is referred to as an STS symbol. Rationally, the G symbol or the T symbol shown in FIG. 3 includes one or more of the following symbols: the CSI-RS symbol, the DMRS symbol, the SRS symbol, the FTS symbol, and the STS symbol.

It may be understood that, in a wireless short-range communication system, measurement signals appear in pairs, that is, two measurement signals are understood as a group of measurement signals. In OFDM symbols carrying a group of measurement signals, an OFDM symbol that first appears in time domain is referred to as an FTS, and an OFDM symbol that first appears in time domain is referred to as an STS.

### 14. Multiple-input multiple-output (Multiple-Input Multiple-Output, MIMO) technology

MIMO is a technology using a plurality of antennas to send and receive signals in the wireless communication field. A transmit end and a receive end respectively use a plurality of transmit antennas and a plurality of receive antennas to transmit and receive signals via the plurality of antennas at the transmit end and the receive end. MIMO can make full use of space resources and implement multi-transmission and multi-reception via a plurality of antennas, and can multiply a system channel capacity without increasing spectrum resources and antenna transmit power, demonstrating significant advantages.

A×B MIMO indicates that the transmit end has A antennas and the receive end has B antennas. In a MIMO system, if a quantity of transmit antennas is not equal to a quantity of receive antennas, a quantity of spatial streams that can be transmitted between the transmit antennas and the receive antennas is less than or equal to a smaller quantity of antennas at the transmit end/the receive end. For example, a 4×4 MIMO system may transmit four or fewer spatial streams, and a 3×2 MIMO system may transmit two or one spatial stream.

The foregoing example descriptions of the terms may be optionally used in the following embodiments.

The following describes a system architecture and a service scenario of embodiments of this application. It should be noted that the system architecture and the service scenario described in this application are intended to describe the technical solutions of this application more clearly, and do not constitute a limitation on the technical solutions provided in this application. It should be understood that, with evolution of the system architecture and emergence of a new service scenario, the technical solutions provided in this application are also applicable to similar technical problems.

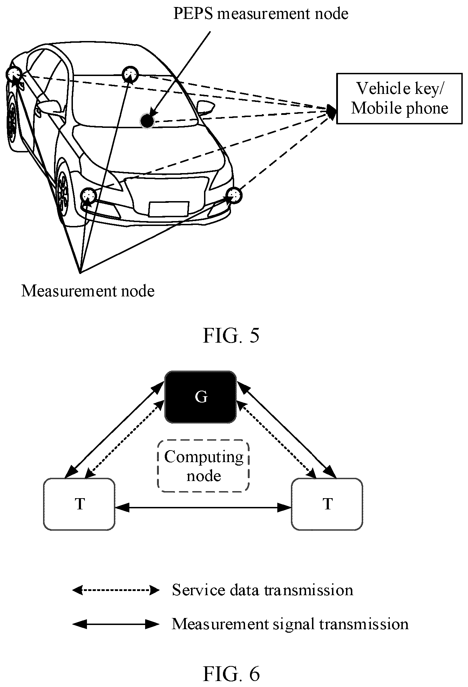

In a communication scenario, a distance and/or a position of a node in a network often need/needs to be determined. FIG. 5 is a diagram of a vehicle-mounted positioning scenario according to an embodiment of this application. Measurement nodes are deployed at four corners outside a vehicle, PEPS measurement nodes are deployed inside the vehicle (for example, a center console, a rear view mirror, or a ceiling (a position inside a top of the vehicle)), and vehicle-mounted wireless communication devices such as a display, a microphone, a speaker, a camera, or a T-BOX in the vehicle may also be used as measurement nodes. The measurement node and/or the PEPS measurement node may be configured to position a measured node. For example, the measured node may be a vehicle key, a mobile phone, a headset, or a special device.

A person skilled in the art should understand that the application scenario shown in FIG. 5 is merely one of example scenarios to which the solutions of this application are applicable. In addition to the application scenario shown in FIG. 5, the solutions in this application may alternatively be applicable to any other appropriate application scenario, for example, but are not limited to scenarios such as a home, an office, an exhibition hall, or production.

In the foregoing implementation, the PEPS measurement node may be a G node, and other devices are T nodes; or the measured node is a G node, and other devices are T nodes. A position measurement architecture between the G node and the T node may include the following two types:

**Architecture 1:** FIG. 6 is a diagram of a communication architecture according to an embodiment of this application. A G node may transmit service data to a plurality of T nodes connected to the G node, and a measurement signal may be transmitted between the G node and the T node (G-T), and between the T node and the T node (T-T). The service data may optionally include ranging-related signaling, parameters, indication information, or the like. For example, the architecture shown in FIG. 6 may include a SparkLink basic (SparkLink Basic, SLB) access layer architecture.

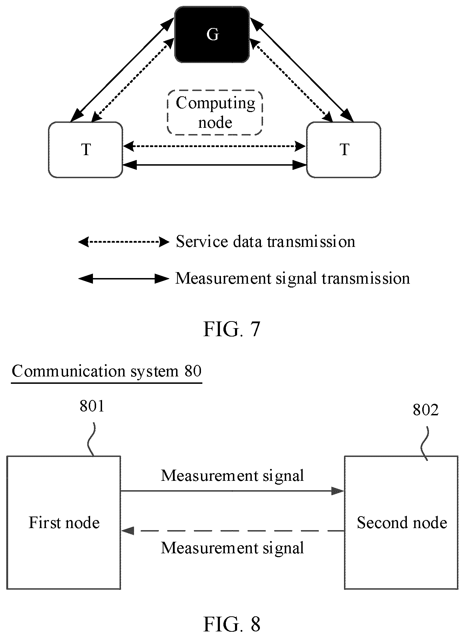

**Architecture 2:** FIG. 7 is a diagram of another communication architecture according to an embodiment of this application. Service data may be transmitted between G and T and between T and T, and a measurement signal may be transmitted between G and T and between T and T. For example, the architecture may be a SparkLink basic (SparkLink Basic, SLB) access layer architecture. For example, the architecture shown in FIG. 7 may include a SparkLink low energy (Sparklink Low Energy, SLE) access layer architecture.

The following describes a structure of a communication system in an embodiment of this application.

FIG. 8 is a diagram of a communication system according to an embodiment of this application. The communication system 80 may be a communication system based on the architecture shown in FIG. 6, or a communication system based on the architecture shown in FIG. 7. A first node may be a G node or a T node, and a second node may be a G node or a T node.

Specifically, the communication system 80 includes a first node 801 and a second node 802. The first node 801 sends a measurement signal to the second node 802, to measure a distance between the first node 801 and the second node 802.

In an example of a ranging process, the first node 801 obtains a measurement result (referred to as a measurement result M1 for ease of differentiation) when sending a measurement signal, and the second node 802 obtains a measurement result (referred to as a measurement result M2 for ease of differentiation) when receiving the measurement signal. The two measurement results may be used to obtain a distance between a T1 node and a G node. For example, the measurement result M1 and the measurement result M2 may be provided for a computing node, and the computing node calculates the distance between the first node 801 and the second node 802 based on the measurement result M1 and the measurement result M2.

In an example of another ranging process, the first node 801 and the second node 802 complete one time of ranging interaction (that is, send a measurement signal to each other and receive the measurement signal from each other), and obtain a measurement result based on the ranging interaction. The measurement result is used to obtain a distance between the first node 801 and the second node 802.

It should be understood that a communication link between the first node 801 and the second node 802 may include one or more types of connection media, for example, include a wired link, a wireless link, or a combination of a wired link and a wireless link.

As an example of the wired link, the wired link includes but is not limited to one or more of a vehicle-mounted wired communication technology, a controller area network (Controller Area Network, CAN), a local interconnect network (Local Interconnect Network, LIN) bus, a CAN flexible data rate (CAN Flexible Data-Rate, CAN FD), an automotive Ethernet, or the like.

As an example of the wireless link, the wireless link includes but is not limited to a short-range connection technology, including SparkLink (SparkLink), 802.11b/g, Bluetooth (Bluetooth), Zigbee (Zigbee), a radio frequency identification (radio frequency identification, RFID) technology, an ultra-wideband (ultra-wideband, UWB) technology, a wireless short-range communication system (for example, a vehicle-mounted wireless short-range communication system), or the like. Alternatively, the wireless link may be a long-range connection technology including radio access type technologies such as a long term evolution (Long Term Evolution, long term evolution)-based communication technology, a fifth generation mobile communication technology (5th generation mobile networks or 5th generation wireless systems, 5th-Generation, 5G or 5G technology for short), a global system for mobile communications (global System for mobile communications, GSM), a general packet radio service (general packet radio Service, GPRS), and a universal mobile telecommunications system (universal mobile telecommunications system, UMTS).

When the first node 801 and the second node 802 support communication over the wireless link, the first node 801 includes a plurality of antennas, and the first node may send/receive a measurement signal via the plurality of antennas. Similarly, the second node 802 includes a plurality of antennas, and sends/receives a measurement signal via the plurality of antennas.

In FIG. 8, ranging between the first node 801 and the second node 802 is used as an example for illustration. However, in an actual scenario, ranging may be performed between a plurality of nodes. When a plurality of anchors measure a same node, in addition to a distance, an angle, a position, and the like can be measured.

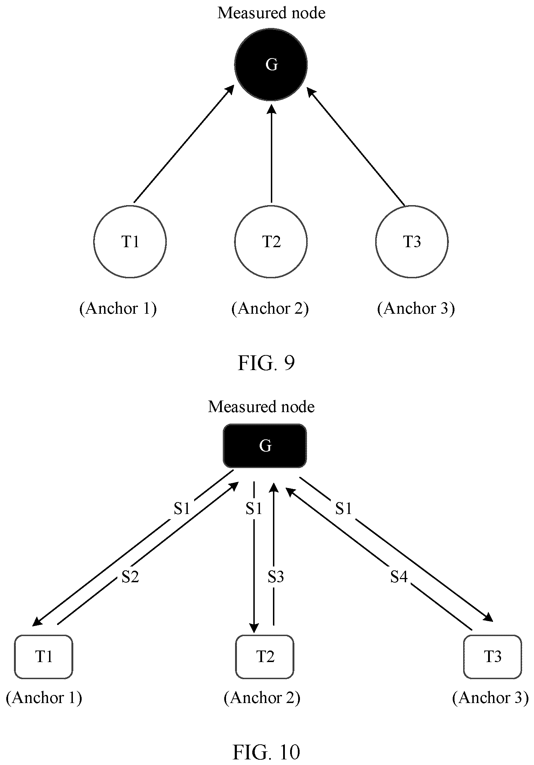

In an example of multi-node ranging, FIG. 9 is a diagram of another communication system according to an embodiment of this application. For example, a to-be-measured node is a G node. A possible angle measurement process is as follows: A T1 node (an anchor 1) and a T2 node (an anchor 2) may measure their respective distances to the G node, thereby obtaining an angle (for example, a pointing angle) between the G node and the T1 node and/or an angle between the G node and the T2 node based on the distances between the G node and the T1 node and the T2 node. Further, a possible positioning process is as follows: A T3 node may also perform ranging on the G node. In this case, a position of the G node can be obtained based on distances between the G node and the T1 node, the T2 node, and the T3 node.

In a possible implementation, one time of ranging interaction needs to be completed between a measurement node and a ranging node. FIG. 10 is a diagram of ranging interaction according to an embodiment of this application. The G node may send a measurement signal (referred to as a measurement signal S1 for ease of differentiation). The T1 node may also send a measurement signal (referred to as a measurement signal S2 for ease of differentiation), and receive the measurement signal S1 from the G node. A measurement result of the measurement signal S1 and the measurement signal S2 are used to compute a distance between the T1 node and the G node. It should be noted that a sending sequence, a sending manner, and the like of S1 and S2 are not limited herein. For example, S1 and S2 may be sent in a manner of unicast, multicast, broadcast, or the like.

Similarly, S1 and S3 (a measurement signal sent by the T2 node) are used to compute a distance between the T2 node and the G node, and S1 and S4 (a measurement signal sent by the T3 node) are used to compute a distance between the T3 node and the G node.

Further, an angle, a position, and the like of the G node can be computed based on distances between a plurality of anchors and the G node. Optionally, distance computation is a possible intermediate result provided for ease of description, and the intermediate result may not be obtained in a specific implementation process. For example, the measurement signal S1, the measurement signal S2, and the measurement signal S3 are used to obtain the angle of the G node through computing. For another example, the measurement signal S1, the measurement signal S2, the measurement signal S3, and the measurement signal S4 are used to obtain the angle of the G node through computing. The measurement signals S1 to S4 may be sent in a manner of unicast, multicast, broadcast, or the like.

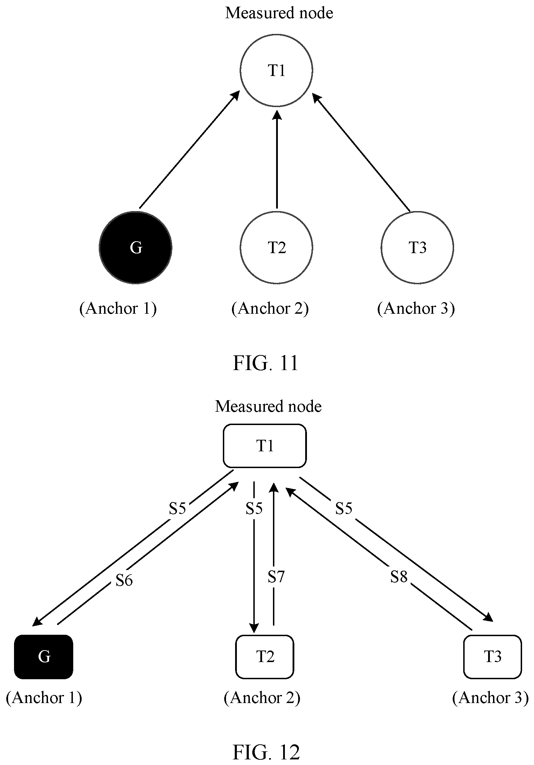

In an example of another multi-node ranging, FIG. 11 is a diagram of still another communication system according to an embodiment of this application. For example, a to-be-measured node is a T1 node. A possible angle measurement process is as follows: A G node (an anchor 1) and a T2 node (an anchor 2) may measure their respective distances to the T1 node, thereby obtaining an angle (for example, a pointing angle) between the T1 node and the G node and/or an angle between the T1 node and the T2 node based on the distances between the T1 node and the G node and the T2 node. Further, a possible positioning process is as follows: A T3 node may also perform ranging on the T1 node. In this case, a position of the T1 node can be obtained based on distances between the T1 node and the G node, the T2 node, and the T3 node.

FIG. 12 is a diagram of ranging interaction according to an embodiment of this application. The T1 node may send a measurement signal (S5). The G node may also send a measurement signal (S6), and receive the measurement signal S5 from the T1 node. A measurement result of the measurement signal S5 and the measurement signal S6 are used to compute a distance between the G node and the T1 node. Similarly, S5 and S7 (a measurement signal sent by the T2 node) are used to compute a distance between the T2 node and the T1 node, and S5 and S8 (a measurement signal sent by the T3 node) are used to compute a distance between the T3 node and the T1 node. The measurement signals S5 to S8 may be sent in a manner of unicast, multicast, broadcast, or the like.

Further, an angle, a position, and the like of the G node can be computed based on distances between a plurality of anchors and the G node. Optionally, distance computation is a possible intermediate result provided for ease of description. In a specific implementation process, the intermediate result may not be obtained, and the angle, the position, and the like may be directly obtained through computing.

The following describes methods provided in embodiments of this application.

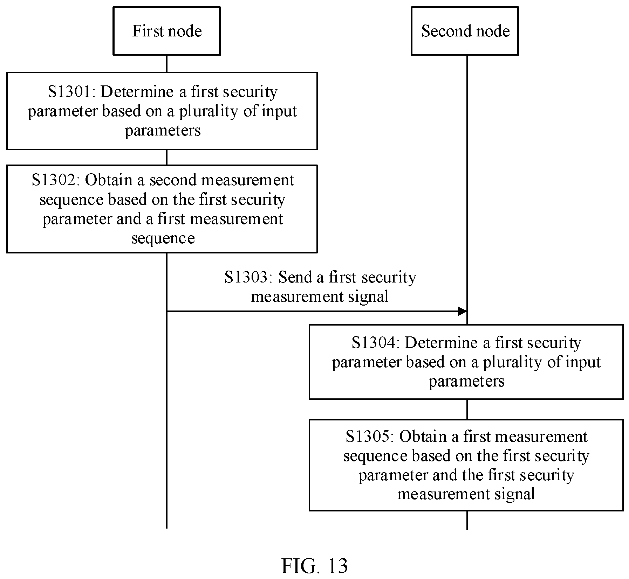

FIG. 13 is a schematic flowchart of a ranging method according to an embodiment of this application. Optionally, the method may be implemented based on the system shown in FIG. 8, FIG. 9, or FIG. 11.

The ranging method shown in FIG. 13 may include one or more of step S1301 to step S1305. It should be understood that, for ease of description, a sequence from S1301 to S1305 is used for description herein, but this is not intended to constitute a limitation that the method is necessarily performed in the foregoing sequence. An execution sequence, execution time, a quantity of execution times, and the like of the foregoing one or more steps are not limited in embodiments of this application. S1301 to step S1305 are specifically as follows:
Step S1301: A first node determines a first security parameter based on a plurality of input parameters.

The plurality of input parameters include one or more of a first random number, a first communication parameter, or the like. The first security parameter is used for security processing on a first measurement sequence, where security processing may include processing such as scrambling/descrambling, encryption/decryption, and exclusive OR. For detailed descriptions, refer to step S1302, step S1304, and the like. It should be noted that the input parameter herein is not a limitation that the foregoing parameter is input by a user by using an input device, but is used to describe a parameter involved in the process of "determining the first security parameter".

**The first random number is a random number, and may be optionally NONCE.** Optionally, a manner of obtaining the first random number may include but is not limited to the following manners: determining the first random number by the first node, receiving the first random number sent by another node (for example, a G node or a second node) to the first node, inputting the first random number by the user, or allocating the first random number by another device to the first node.

**The first communication parameter is a communication-related parameter.** Optionally, the communication parameter changes with signal transmission.

In a possible implementation, the first communication parameter is related to one or more of the following information: a sequence number of an OFDM symbol, a number of a time unit, a number of a frequency unit, a frequency hopping channel sequence, and the like. The time unit includes but is not limited to a super frame, a radio frame, a subframe, or the like. The frequency unit includes but is not limited to a carrier channel, a carrier signal group, a subcarrier, or the like.

"Related" herein includes: The first communication parameter may be the foregoing information, or the first communication parameter has a mapping relationship with the foregoing information, or the first communication parameter is updated based on the foregoing information.

**The following describes possible cases of the first communication parameter by using an example.**

**Case 1:** The first communication parameter is determined based on a sequence number of a symbol (for example, the OFDM symbol). For example, the first communication parameter is a sequence number of a symbol. For another example, the first communication parameter has a mapping relationship with a sequence number of a symbol.

In a possible implementation, the first measurement sequence is carried in a first symbol (or the first measurement sequence may be modulated to obtain the first symbol), and the first communication parameter is a sequence number of the first symbol, or has a mapping relationship with a sequence number of the first symbol. For example, the sequence number of the first symbol is N1, and the first communication parameter is N1.

In a possible implementation, if the first communication parameter is transmitted on a symbol numbered N2, the first communication parameter is N2 or has a mapping relationship with N2.

In another possible implementation, a value of the first communication parameter may be updated, an initial value of the first communication parameter is a preset value, and the value of the first communication parameter is updated once every one or more symbols. For example, in ranging interaction, the value of the first communication parameter is a sequence number of a ranging symbol. For a 1^{st} ranging symbol, COUNTERr is 0. Each time a sent ranging symbol is added subsequently, the value of COUNTERr is increased by 1.

In still another possible implementation, if the preset value of the first communication parameter is transmitted on a symbol numbered N3, the first communication parameter is N3 or has a mapping relationship with N3.

In a possible implementation, the first communication parameter is associated with a position of a first OFDM symbol relative to a second OFDM symbol. The first OFDM symbol carries a first security measurement signal, the second OFDM symbol carries a second security measurement signal, and the first communication parameter corresponding to the second security measurement signal is a preset value.

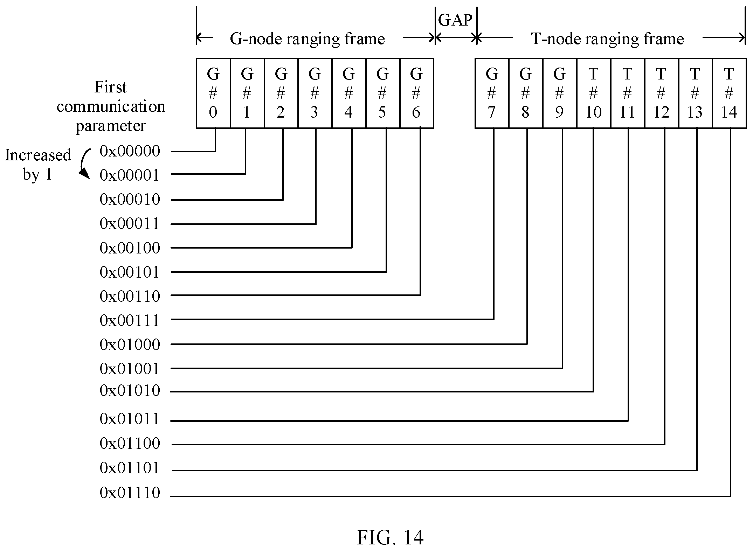

FIG. 14 is a diagram of first communication parameter change according to an embodiment of this application. When the second security measurement signal is carried in G#0, a value of the first communication parameter is 0x00000 (which may be considered as an initial value). The value of the communication parameter is increased by 1 per symbol. If the first security measurement signal is carried in G#9, when the first security parameter is generated, the value of the first communication parameter is Ox01001. In this case, because a position of G#9 is offset backward by eight symbols relative to a position of G#0, the value of the first communication parameter may also be understood as a value obtained after 0x00000 is updated eight times.

**Case 2:** The first communication parameter is determined based on a sequence number of a radio frame (referred to as a radio frame number for short). For example, the first communication parameter is a radio frame number. For another example, the first communication parameter has a mapping relationship with a radio frame number.

In a possible implementation, the first communication parameter includes a sequence number of a radio frame carrying the first security measurement signal. Alternatively, the first communication parameter has a mapping relationship with a sequence number of a radio frame carrying the first security measurement signal.

In a possible implementation, the first communication parameter is updated from a preset value based on the radio frame number. For example, the first communication parameter is updated once per radio frame, and therefore, each radio frame uses a different first communication parameter.

In a possible implementation, the preset value of the first communication parameter is a sequence number of a radio frame for sending the first communication parameter, or has a mapping relationship with a sequence number of a radio frame for sending the first communication parameter.

For related descriptions, refer to the descriptions in Case 1.

**Case 3:** The first communication parameter is determined based on a sequence number of a super frame (referred to as a super frame number for short). For example, the first communication parameter is a super frame number. For another example, the first communication parameter has a mapping relationship with a super frame number.

In a possible implementation, the first communication parameter includes a sequence number of a super frame carrying the first security measurement signal. Alternatively, the first communication parameter has a mapping relationship with a sequence number of a super frame carrying the first security measurement signal.

In a possible implementation, the first communication parameter is updated from a preset value based on the super frame number. For example, the first communication parameter is updated once per super frame number, and therefore, each super frame number uses a different first communication parameter.

In a possible implementation, the preset value of the first communication parameter is a sequence number of a super frame for sending the first communication parameter, or has a mapping relationship with a sequence number of a super frame for sending the first communication parameter.

For related descriptions, refer to the descriptions in Case 1.

**Case 4:** The first communication parameter is determined based on a number of a frequency unit. For example, the first communication parameter is a number of a frequency unit, or the first communication parameter has a mapping relationship with a number of a frequency unit. The frequency unit includes a carrier channel, a carrier channel group, a subcarrier, and the like.

Optionally, the first communication parameter is determined based on a number of a first frequency unit. The first security measurement signal is carried in a first time unit, and the first time unit is included in a plurality of consecutive time units. Based on a preset frequency unit number sequence for transmission, frequency hopping transmission is performed on a signal carried in the plurality of consecutive time units. The number of the first frequency unit belongs to the preset frequency unit number sequence. FIG. 8 is used as an example. Frequency hopping transmission is performed for a plurality of times of consecutive ranging interaction. When the first security measurement signal is transmitted on a carrier channel 3, the first communication parameter may be determined based on a carrier channel number of the carrier channel 3. **It should be noted that the time unit in "the plurality of consecutive time units" herein is a frequency hopping time unit during frequency hopping transmission, and may be the same as or different from a granularity of the time unit used for determining the first communication parameter.**

Optionally, when the first node and the second node perform ranging in a frequency hopping mode, the number of the frequency unit may be used in a process of determining the first security parameter. Certainly, when the first node and the second node do not perform ranging in the frequency hopping mode, the number of the frequency unit may also be used in the process of determining the first security parameter.

It should be noted that the foregoing plurality of cases may be combined.

In an example of a combination, the first communication parameter may be determined based on a super frame number, a radio frame number, a sequence number of a symbol, and a channel number. For example, when the first security measurement signal is carried in G#9, a number of G#9 is, for example, 0x01, G#9 is included in a radio frame whose sequence number is Ox001, and the radio frame is included in a super frame whose sequence number is 0x1001. In addition, if a number of a carrier channel for transmitting the radio frame is Ox11, the first communication parameter is obtained by connecting the sequence number of the symbol, the radio frame number, the super frame number, and the channel number, that is, 01∥001∥1001∥11, where "∥" indicates connection.

**In some possible implementations,** a manner of obtaining the first communication parameter may include but is not limited to the following manners: determining the first communication parameter by the first node, receiving the first communication parameter sent by another node (for example, the G node or the second node) to the first node, inputting the first communication parameter by the user, or allocating the first communication parameter by another device to the first node.

**In some other possible implementations,** the first communication parameter does not need to be generated by a node, but is determined according to a preset rule. For example, the first communication parameter is updated from a preset value, and the communication parameter is updated per time unit and/or per frequency unit (for example, per symbol). Therefore, when the first node and the second node update values of the first communication parameter according to a consistent rule, consistent communication parameters may be obtained.

**Optionally,** the first node (or the grant node or the second node) may set the communication parameter to a preset value at a moment. Alternatively, optionally, when each measurement starts, the first communication parameter is set to a preset value.

**In a possible implementation,** each time measurement is performed, COUNTERr is updated from 0, and is updated once per symbol. To be specific, the communication parameter COUNTERr corresponding to a current symbol is x, and when a next measurement symbol is reached, COUNTERr=x+1.

**Optionally,** the first random number and the first communication parameter are some parameters for determining the first security parameter, and the plurality of input parameters may further include another parameter. For example, the another parameter includes but is not limited to a fresh parameter, antenna indication information, an identity of the first node, an identity of the second node, or the like.

The antenna indication information indicates at least one antenna. For example, the first node includes six antennas, which are referred to as an antenna 1, an antenna 2, an antenna 3, an antenna 4, an antenna 5, and an antenna 6 for ease of differentiation. The first security measurement signal is transmitted via at least one of the six antennas. Optionally, the antenna indication information includes but is not limited to an antenna number, an antenna ID, an antenna name, and the like. For example, when the antenna indication information is 0x000, the antenna 1 is indicated, and when the antenna indication information is Ox001, the antenna 2 is indicated.

In a possible implementation, when the first security measurement signal is sent via the antenna 1, the input parameter used to determine the first security parameter includes antenna indication information, and the antenna indication information indicates the antenna 1.

**As mentioned above, the first security parameter is a parameter used for security processing on the first measurement sequence.** Optionally, the first security parameter may include a plurality of bits (bits). The following uses an example in which the first security parameter includes E1 (E1 is an integer and E1>1) bits for description. Further, an information bit length of the first security parameter is the same as or has a mapping relationship with an information bit length of the first measurement sequence. For example, when the information bit length of the first measurement sequence is 78 bits, the information bit length of the first security parameter is 78 bits.

In a possible implementation, the first node obtains the first security parameter based on the plurality of input parameters and a derivation algorithm. The derivation algorithm includes but is not limited to a key derivation function, a digest algorithm, a message authentication code algorithm, and the like.

For example, the first security parameter=KDF (rand, COUNTERr), where rand is the first random number, and COUNTERr is the first communication parameter. For another example, the first security parameter=KDF (rand, COUNTERr||carrier channel number for frequency hopping).

Certainly, in embodiments of this application, KDF may be replaced with a derivation algorithm such as HMAC-SM3 or HMAC-SHA256.

**In some scenarios, the first security parameter may be included in a plurality of derived values (for example, a KDF output result).** For example, in the following scenarios: Scenario 1: A bit length of the first measurement sequence may be large, and an information bit length of one derived value may not meet a security processing requirement for the first measurement sequence. Scenario 2: To improve security, the first node obtains a plurality of derived values based on the plurality of input parameters, and then obtains the first security parameter based on the one or more derived values. This further increases difficulty in cracking the first security parameter. Scenario 3: The first node encrypts or scrambles, by using the first security parameter, a plurality of measurement signals transmitted in one frequency hopping period (three times of ranging interaction shown in FIG. 4 are considered as one frequency hopping period), and the first node needs to generate a security parameter with a larger quantity of bits, to scramble data carried in the plurality of measurement signals.

**In a possible implementation, the first node obtains N bit sequences based on the plurality of input parameters,** where the N bit sequences include the first security parameter, N is an integer, and N≥1. The bit sequence is a sequence including a plurality of bits, and lengths of the N bit sequences may be the same or may be different. For example, an information bit length of the bit sequence is 128 bits, 224 bits, 256 bits, or the like.

For example, the **bit sequence**=KDF (rand, COUNTERr, [counter]), where rand is the first random number, COUNTERr is the first communication parameter, counter is an optional fresh parameter (described below), and [] indicates optional.

For another example, in the frequency hopping mode, the bit sequence=KDF (rand, COUNTERr∥carrier channel number, [counter]). ∥ indicates connection.

The carrier channel number may be used to distinguish between different carrier channels. The carrier channel number may be a number of a carrier channel (for example, a start frequency or a center frequency). Alternatively, the carrier channel number may be a sequence number of a carrier channel in a period of time. For example, in a super frame, a carrier channel number corresponding to a 1^{st} carrier channel used for transmission is 0, and a carrier channel number corresponding to a 2^{nd} carrier channel is 1. In addition, the carrier channel number may be replaced with another parameter reflecting a frequency hopping channel.

Certainly, when the frequency hopping mode is not used, a number of the frequency hopping channel may also be used in a process of generating the bit sequence.

For example, the first node obtains, based on the plurality of input parameters, one bit sequence whose length is 256 bits. The first security parameter (E1=76) is 76 bits in the bit sequence. For example, the first node intercepts first 76 bits of the bit sequence as the first security parameter. For another example, the first node selects 76 bits from the bit sequence as the first security parameter.

For another example, the first node obtains, based on the plurality of input parameters, two bit sequences whose lengths are 256 bits, and obtains, based on the two bit sequences, the first security parameter whose length is 304 bits (E1=304). For example, the first node selects first 256 bits of the 1^{st} bit sequence and first 48 bits of the 2^{nd} bit sequence as the first security parameter. For another example, the first node selects 304 bits from the two bit sequences as the first security parameter.

**In some possible implementations, when N is greater than 1, values of any two of the N bit sequences are different. In this way, difficulty in cracking the security parameter can be increased, and security can be improved.**

**The following describes several implementations of generating the N (N>1) bit sequences.**

**Implementation 1:** The input parameter further includes a fresh parameter, and a value of the fresh parameter used when each bit in the N bit sequence is generated is different.

In a possible implementation, the fresh parameter is updated each time after one of the N bit sequences is obtained.

For example, the bit sequence=KDF (rand, COUNTERr, counter). When the 1^{st} bit sequence is generated, counter-counter 1. When the 2^{nd} bit sequence is generated, counter-counter 2, and counter 1 and counter 2 are different. In this implementation, the input parameters of the N bit sequences can be different, so that different bit sequences are obtained.

For example, an information bit length of a first security parameter required by a security measurement symbol is greater than 256 bits but less than (optionally including or equal to) 512 bits. In this case, values of counter are sequentially 0 and 1 (refreshed twice), and two 256-bit bit sequences are respectively generated. The security parameter is some or all bits in the two bit sequences.

For another example, the fresh parameter is determined according to a preset rule. For example, the fresh parameter is determined based on pi, and a first value of the fresh parameter ranges from 1^{st} to 10^{th} bits of pi, and ranges from 11^{th} to 20^{th} bits of pi after the first update. Other cases are deduced by analogy. For another example, the fresh parameter is determined based on a pseudo-random sequence.

In a possible implementation, a fresh parameter corresponding to a first bit sequence in the N bit sequences is a preset value, a fresh parameter corresponding to a second bit sequence in the N bit sequences is associated with the preset value and a sequence number of the second bit sequence, and the second bit sequence is different from the first bit sequence.

For example, the fresh parameter is increased by 1 per bit sequence. In a case in which the preset value of the fresh parameter is x, when the second bit sequence is a 1^{st} bit sequence in the N bit sequences, the fresh parameter is x. When the second bit sequence is a 2^{nd} bit sequence in the N bit sequences, the fresh parameter is x+1. Other cases are deduced by analogy. The fresh parameter corresponding to an I^{th} bit sequence is x+(I-1). In this implementation, the input parameters of the N bit sequences can be different, so that different bit sequences are obtained.

**Implementation 2:** The first node obtains the 1^{st} bit sequence in the N bit sequences based on the plurality of input parameters, and obtains the I^{th} bit sequence based on the plurality of input parameters and an (I-1)^{th} bit sequence, where I is an integer, and N≥I≥2. That is, starting from the 2^{nd} bit sequence, the previous bit sequence is used as one of the input parameters to determine the current bit sequence.

For example, the N bit sequences are respectively represented as B1, B2, B3, and the like, and may be determined in the following manner:
B1=KDF (rand, COUNTERr),
B2=KDF (rand, COUNTERr, B1),
B3=KDF (rand, COUNTERr, B2),
   ...

In this implementation, the input parameters of the N bit sequences can be different, so that different bit sequences are obtained. It should be noted that this is a possible determining manner listed herein for representing a parameter, and a sequence and an input manner of the parameter are not limited.

The foregoing two implementations are example descriptions of how to generate the N bit sequences. In a specific implementation process, the N bit sequences may be generated in another manner. In addition, the foregoing two implementations may be combined, for example:
B1=KDF (rand, COUNTERr, counter1),
B2=KDF (rand, COUNTERr, B1, counter2),
B3=KDF (rand, COUNTERr, B2, counter3), where counter1, counter2, and counter3 are different. For a design of counter, refer to Implementation 1.

Optionally, when N is equal to 1, counter may be a default value or a first value. The first value is a predefined value, for example, 0 or 1.

Step S1302: The first node obtains a second measurement sequence based on the first security parameter and the first measurement sequence.

The first measurement sequence is a sequence including a plurality of bits. In a possible implementation, the first node may generate a pseudo-random sequence, process the pseudo-random sequence, and then carry a processed pseudo-random sequence in an OFDM symbol (for example, a CSI-RS symbol, an SRS symbol, or a DMRS symbol) for position information measurement. In this case, the first measurement sequence is the pseudo-random sequence. Optionally, the pseudo-random sequence is a Gold sequence.

**Optionally,** the first node may obtain the second measurement sequence based on the first security parameter and the first measurement sequence in the following several manners:
**Manner 1:** The first node scrambles the first measurement sequence by using the first security parameter, to obtain the second measurement sequence.

In a possible implementation, the first measurement sequence includes M information bits, represented as C(i), and i=1, 2, ..., M. The first security parameter includes E1 information bits, represented as K(j), and j=1, 2, ..., E1. M is usually equal to E1, or has a mapping relationship with E1.

For example, the first node may perform corresponding bit scrambling on the first measurement sequence by using the first security parameter, to obtain the second measurement sequence. The second measurement sequence (also referred to as a frequency domain scrambling sequence) may be represented as D(j), and j=1, 2, ..., M. It should be understood that "corresponding bit scrambling" described herein is an optional scrambling manner. In a specific implementation, this embodiment of this application is also applicable to a case in which scrambling is performed in another manner.

Corresponding bit scrambling means scrambling one or more bits in the first security parameter and one or more bits in the first measurement sequence. For example, C(1) and K(1) are scrambled to obtain D(1), C(2) and K(2) are scrambled to obtain D(2), and the other bits are deduced by analogy, to obtain the second measurement sequence.

For example, the first measurement sequence includes 76 bits, respectively represented as C(i), and i=1, 2, ..., 76. The first security parameter includes 76 bits, respectively represented as K(j), and j=1, 2, ..., 76. The first measurement sequence is scrambled by using the first security parameter, to obtain D(j), and j=1, 2, ..., 76.

For another example, the first measurement sequence includes 76 bits, respectively represented as C(i), and i=1, 2, ..., 76. The first security parameter includes 38 bits, respectively represented as K1(j), and j=1, 2, ..., 38. The first node repeats the first security parameter bit by bit, to obtain K2(j), and j=1, 2, ..., 76. The first measurement sequence is scrambled by using K2(j) to obtain D(j), and j=1, 2, ..., 76.

Optionally, bit repetition may be implemented in the following manner: Some bits in the plurality of bits are extended to obtain a bit sequence with a larger bit length. For example, the first security parameter is 4 bits, for example, 0x1010. Each 1 bit in the 4 bits is extended to 2 bits, to obtain 8 bits, that is, 0x11001100.

Alternatively, optionally, bit repetition may be implemented in the following manner: Some or all of the original plurality of bits are repeated, and are connected to the front or the rear of the original plurality of bits, to obtain a bit sequence with a larger bit length. For example, the first security parameter is 4 bits, for example, 0x1010. All bits in the 4 bits are repeated, and the repeated bits are connected to the rear of the original bits, to obtain an 8-bit bit stream, that is, Ox11001100.

**Manner 2:** The first node performs exclusive OR on the first security parameter and the first measurement sequence, to obtain the second measurement sequence.

For example, the first measurement sequence includes M information bits, represented as C(i), and i=1, 2, ..., M. The first security parameter includes M information bits, represented as K(j), and j=1, 2, ..., M. Exclusive OR is performed on the first security parameter and the first measurement sequence to obtain the second measurement sequence, where the second measurement sequence is represented as D(j), and j=1, 2, ..., M.

For the related descriptions, refer to the foregoing descriptions.

**Manner 3:** The first node encrypts the first measurement sequence by using the first security parameter, to obtain the second measurement sequence.

For example, the first security parameter and the first measurement sequence are input into an encryption algorithm, and the second measurement sequence is obtained based on an output of the encryption algorithm. The first security parameter may be used as a key.

The foregoing manner is an example description provided for ease of understanding. In a specific implementation process, the second measurement sequence may be obtained based on the first security parameter and the first measurement sequence in another manner.

**In a possible implementation,** the information bit length of the first measurement sequence is related to a modulation scheme, a quantity of valid subcarriers, and the like. For example, the first node performs channel measurement (for example, a CSI-RS, an SRS, or a DMRS) by using at least one OFDM symbol, and each carrier channel includes 38 valid subcarriers and one DC subcarrier. In this case, an object to which the first security parameter is applied is a pseudo-random sequence used for pseudo-random quadrature phase shift keying (quadrature phase-shift keying, QPSK) modulation. The first node may select some bits in one or more bit sequences (each bit sequence includes 128 bits or 256 bits) to process the measurement signal. Because the DC subcarrier is ignored in pseudo-random QPSK modulation, information bits carried in the OFDM symbol obtained through modulation are 76 bits. That is, the first measurement sequence is 76 bits or less than 76 bits.

In some scenarios, a plurality of OFDM symbols are aggregated in frequency domain in a carrier aggregation manner, to form an OFDM symbol that occupies a larger bandwidth. In this case, an information bit length of a measurement signal carried in the OFDM symbol also correspondingly increases. For example, three 20 MHz OFDM symbols are aggregated in frequency domain in a carrier aggregation manner, to form a 60 MHz OFDM symbol.

Similar to scrambling and modulation manners of a single carrier, in a carrier aggregation scenario, pseudo-random modulation is performed on 38 valid subcarriers in each carrier, and no modulation is performed on a DC subcarrier and three subcarriers spaced between adjacent carriers.

For example, in 60 MHz OFDM, subcarriers numbered 0 to 38 included in carrier channels 1/2/3, plus three subcarriers between the carrier channels 1 and 2 and three subcarriers between the carrier channels 2 and 3, there are a total of 39*3+3*2=123 subcarriers. A quantity of valid subcarriers is 114. A measurement signal corresponding to the second measurement sequence is carried in a 60 MHz OFDM symbol. When a modulation scheme of the second measurement sequence is QPSK modulation, a quantity of bits of the measurement signal is 228 (a case in which bit repetition is not considered). Further, in this case, when determining the security parameter, the first node may obtain a 228-bit security parameter based on one or more bit sequences, to process the first measurement sequence.

In some scenarios, the first node includes Ntx antennas, where Ntx is an integer, and Ntx>1. The first node generates the first security parameter based on the first random number, and the information bit length of the first security parameter is greater than or equal to M×Ntx. For example, the first security parameter includes M×Ntx bits. The first security parameter is represented as, for example, D(i,j), where i=1, 2, ..., M, and j=1, 2, 3, ..., Ntx. The M bits are used for a measurement signal of one spatial stream (or referred to as one spatial layer).

For example, a bandwidth of a measurement symbol (for example, a CSI-RS symbol, an SRS symbol, or a DMRS symbol) corresponding to each spatial stream may be 20 MHz to 320 MHz, and a bandwidth of a single carrier is 20 MHz.

In a possible example, 4×4 MIMO is used as an example. Both a quantity of transmit antennas and a quantity of spatial streams of a sending device are 4 (that is, Ntx=4), and a bandwidth of a measurement symbol is 20 MHz for a single carrier. When QPSK modulation is used and the valid subcarriers are 38 subcarriers, each spatial stream requires a security parameter of 76 bits to generate a modulation sequence required by the 38 valid subcarriers. When QPSK modulation is used and there are 38 valid subcarriers, four spatial streams require a security parameter of 304 bits.

In another possible example, 4×4 MIMO is used as an example. When both a quantity of transmit antennas and a quantity of spatial streams of the sending device are Ntx=4, and a bandwidth of a symbol is 20 MHz for a single carrier, each spatial stream requires a different KDF sequence of 76 bits to generate a random QPSK sequence required by 38 subcarriers, the first node needs to generate two 256-bit bit sequences, and splice the two 256-bit bit sequences to obtain a 512-bit bit sequence, where the 512-bit bit sequence is used for sequentially scrambling four symbols of spatial streams 1 to 4.

In this case, the first node may generate a plurality of bit sequences, and obtain the first security parameter based on the plurality of bit sequences. For example, the first node generates two bit sequences, each bit sequence includes 256 bits, and splices the two bit sequences to obtain a 512-bit sequence. The first node selects some bits from the 512 bits, and performs processing (for example, scrambling, exclusive OR, or encryption) on the first measurement sequence, to obtain the first security measurement signal.

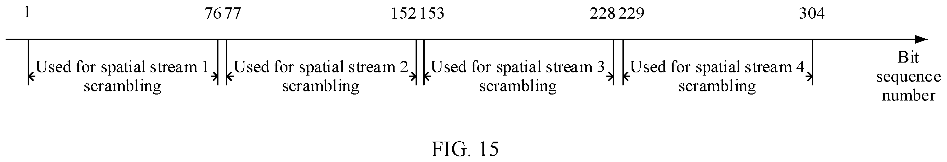

FIG. 15 is a diagram of bit sequence allocation according to an embodiment of this application. Splicing one or more bit sequences to obtain data of at least 152 bits, where the 1^{st} to the 76^{th} bits are used to scramble a measurement signal carried in a spatial stream 1, and the 77^{th} to the 152^{nd} bits are used to scramble a measurement signal carried in a spatial stream 2.

Optionally, when both a plurality of carriers and a plurality of ports exist, low-order bits of D(i,j) are first used to scramble a multi-carrier ranging symbol of a first spatial stream, and then are sequentially used to scramble a multi-carrier ranging symbol of a high-order spatial stream.

Step S1303: The first node sends the first security measurement signal.

For example, the first security measurement signal may be carried in a CSI-RS symbol, an SRS symbol, or a DMRS symbol.

The first security measurement signal is associated with the second measurement sequence.

In a possible implementation, the first security measurement signal is obtained by modulating the second measurement sequence. For example, a random QPSK sequence is generated by using a frequency domain scrambling sequence D(j), and each valid subcarrier is modulated, to obtain the first security measurement signal. QPSK symbols generated by D(1) and D(2) are used to modulate a valid subcarrier #1, and QPSK symbols generated by D(3) and D(4) are used to modulate a valid subcarrier #2.

The first security measurement signal is used for ranging. For example, the first security measurement signal may be sent during ranging interaction between the first node and the second node. Alternatively, the first node may obtain a measurement result based on the first security measurement signal, and the measurement result may be used to compute a distance between the first node and the another node.

It may be understood that the first node sends the first security measurement signal, and the first security measurement signal may be received by another node. Herein, an example in which a receive end is the second node is used. The second node receives the first security measurement signal from the first node. Optionally, the first node may send the first security measurement signal in a manner of unicast, broadcast, multicast, or the like.

In a possible implementation, the first node may receive a destination address (for example, an address of the second node) sent by a third node. In some scenarios, the first node may learn, based on the destination address, a node that is the receive end of the first security measurement signal.

In another possible implementation, the first node may further receive a source address (namely, an address of the first node) from the third node. In some scenarios, the source address may indicate the first node to perform channel measurement.

Similarly, the second node may alternatively receive the destination address and/or the source address from the third node.

In a possible implementation, the third node may be a grant node. For example, the third node may be a G node in a SparkLink communication system.

It should be noted that, when there is no communication connection between the first node and the second node, the grant node may send the source address and/or the destination address to the first node and/or the second node.

Step S1304: The second node determines a first security parameter based on a plurality of input parameters.

The plurality of input parameters include but are not limited to one or more of a first random number, a first communication parameter, a fresh parameter, antenna indication information, an identity of the first node, an identity of the second node, or the like.

For related descriptions, refer to related descriptions in step S1301.

In a possible implementation, if the first node generates the first security parameter in a specific manner, the second node also generates the first security parameter in the same manner, so that the first node and the second node have consistent security parameters.

Step S1305: The second node obtains a first measurement sequence based on the first security parameter and the first security measurement signal.

It may be understood that the second node performs an inverse operation of an operation performed by the first node on the first security measurement signal, to obtain the first measurement sequence.

For example, the second node demodulates the first security measurement signal to obtain a second measurement sequence, and obtains the first measurement sequence based on the second measurement sequence.

For example, the second node may obtain the first measurement sequence in the following several manners:
**Manner 1:** The second node descrambles the second measurement sequence by using the first security parameter, to obtain the first measurement sequence.

The second measurement sequence includes M information bits, and may be represented as D(j), where j=1, 2, ..., M. The first security parameter includes E1 information bits, represented as K(j), and j=1, 2, ..., E1. Corresponding bit descrambling is performed on the second measurement sequence by using the first security parameter, to obtain the first measurement sequence, where the first measurement sequence is represented as C(i), and i=1, 2, ..., M.

**Manner 2:** The second node performs exclusive OR on the first security parameter and the second measurement sequence, to obtain the first measurement sequence.

Manner 3: The second node decrypts the second measurement sequence by using the first security parameter, to obtain the first measurement sequence.

For related descriptions, refer to step S1302. Details are not described herein again.

In the embodiment shown in FIG. 13, when sending the measurement signal, the first node processes the measurement signal based on the random number and the communication parameter to obtain the security measurement signal, and sends the security measurement signal to complete the ranging process. On one hand, the random number is random and is difficult to crack. On the other hand, the communication parameter changes at any time in a communication process. For example, a time unit and a frequency unit change as transmission proceeds, and are also difficult to crack. The measurement signal is processed by using the random number and the communication parameter, so that difficulty in cracking the measurement signal is greatly increased, thereby implementing secure ranging, and improving communication security.

In addition, communication parameters can change consistently without a communication connection (which is a communication connection for transmitting service data) between the first node and the second node, thereby reducing connection establishment steps in a ranging procedure, reducing ranging complexity, and improving universality of the ranging process. The method is further applicable to ranging in a plurality of indirect connection cases, for example, ranging between two T nodes.

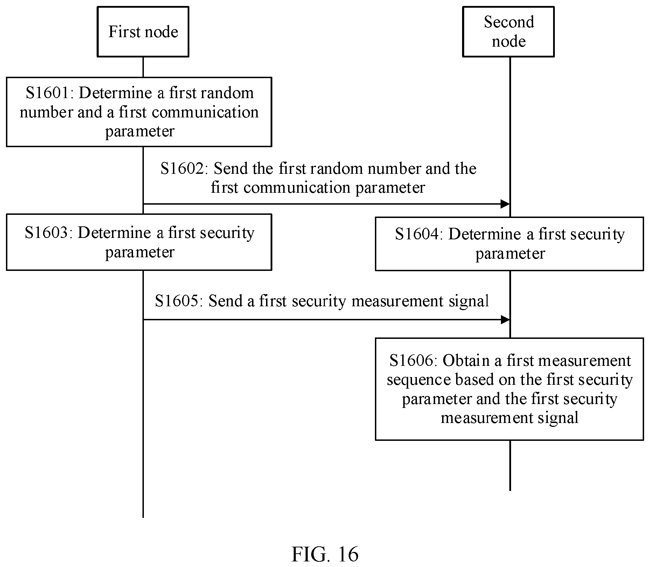

In FIG. 13, the first node and the second node are used as examples to describe sending/receiving of the measurement signal. Because there are a plurality of possible manners of determining the input parameter, the following describes several possible manners of determining the input parameter based on FIG. 16, FIG. 17, FIG. 18, and FIG. 19. It should be noted that, for concepts, logic, and the like that are not explained below, refer to related descriptions in FIG. 13.

### [Design 1]

In a possible design, a first random number and a first communication parameter are determined by a transmit end of a measurement signal, the transmit end sends the first random number and the first communication parameter to a receive end, and the transmit end and the receive end obtain first security parameters based on the first random number and the first communication parameter, and implement secure transmission of the measurement signal based on the first security parameters.

Optionally, the transmit end and the receive end have a communication connection, and support transmission of service data based on the communication connection. The service data includes the first random number and the first communication parameter. For example, as shown in FIG. 6, the design may be applied to G-T ranging. For example, as shown in FIG. 7, the design may be applied to G-T ranging or T-T ranging.

In a possible implementation, the transmit end of the measurement signal is a grant node, and/or the receive end of the measurement signal is a grant node.

FIG. 16 is a schematic flowchart of another ranging method according to an embodiment of this application. It should be understood that, for ease of description, a sequence from S1601 to S1606 is used for description herein, but this is not intended to constitute a limitation that the method is necessarily performed in the foregoing sequence. An execution sequence, execution time, a quantity of execution times, and the like of the foregoing one or more steps are not limited in embodiments of this application. S1601 to step S1606 are specifically as follows:
Step S1601: A first node determines a first random number and a first communication parameter.

Optionally, the first communication parameter may be determined based on one or more of the following: a super frame number, a radio frame number, a channel number, a sequence number of a symbol, or the like.

Optionally, when the first communication parameter is determined, the determining may include generating, or include obtaining the first communication parameter through updating based on an original communication parameter.

In some scenarios, the first node does not need to generate a new first communication parameter each time before sending a measurement signal. For example, after the first node generates a communication parameter, the communication parameter is updated, so that the update may be performed in a plurality of measurement signals based on the original communication parameter, to determine the first communication parameter.

Step S1602: The first node sends the first random number and the first communication parameter.

Correspondingly, a second node receives the first communication parameter and the first random number that are sent by the first node.

Optionally, the first node does not need to send the first communication parameter each time before sending the measurement signal. In other words, the step of sending the first communication parameter by the first node is an optional step during sending of the measurement signal.

In a possible implementation, the first node determines only a preset value of the first communication parameter, and the first node and the second node may obtain a new communication parameter based on a change of the preset value of the first communication parameter.

Optionally, the first node may send the first communication parameter in a manner of broadcast, multicast, or unicast. Optionally, the first node may send the first random number in a manner of broadcast, multicast, or unicast.

Step S1603: The first node determines a first security parameter.

The first communication parameter and the first random number are used in a process of determining the first security parameter.

For example, a bit sequence 1=KDF (rand, COUNTERr||carrier channel number), where rand is the first random number, COUNTERr is the first communication parameter, and the carrier channel number is a number, a sequence number, or the like of a carrier channel applicable to signal transmission. The first security parameter includes some or all bits in the bit sequence 1.

For example, a bit sequence 1=KDF (rand, COUNTERr), where rand is the first random number, and COUNTERr is the first communication parameter. The first security parameter includes some or all bits in the bit sequence 1.

For another example, N bit sequences are respectively represented as B(1), B(2), B(3), and the like. B(d)=KDF (rand, COUNTERr, [counter]), where N≥d≥1, [counter] indicates a fresh parameter, and counter is an optional parameter.

In a possible design, when N is 1, counter is not required when the bit sequence is determined, or counter is a preset value, and the preset value of counter is, for example, 0, 1, or a default value. When N is greater than 1, counter is increased by 1 each time after a bit sequence is obtained.

Optionally, when an information bit length of a security parameter required by one symbol is less than 256 bits, counter is not required (or counter is a preset value), and one bit sequence is used to process data carried by one symbol. In other words, one KDF output corresponds to one symbol.

Optionally, when an information bit length of a security parameter required by one symbol is greater than 256 bits, a plurality of bit sequences are obtained by using counter; and the plurality of bit sequences are intercepted or spliced based on the information bit length of the security parameter required by one symbol, to obtain the security parameter.

In a possible implementation, different symbols correspond to different first communication parameters.

In a possible implementation, during each measurement interaction, the communication parameter is updated from a preset value, and the communication parameter is updated per symbol. For example, during each measurement interaction, COUNTERr is updated from 0. A communication parameter COUNTERr corresponding to a current symbol is x, and when a next measurement symbol is reached, COUNTERr=x+1.

For related descriptions, refer to related descriptions of step S1301.

Step S1604: The second node determines a first security parameter.

Refer to related descriptions on the first node side in step S1603.

Step S1605: The first node sends a first security measurement signal. Correspondingly, the second node receives the first security measurement signal from the first node.

The first security measurement signal corresponds to a second measurement sequence. For related descriptions, refer to step S1302 and step S1303.

Step S1606: The second node obtains a first measurement sequence based on the first security parameter and the first security measurement signal.

For example, the first node performs specific processing to obtain the first security measurement signal. Correspondingly, when receiving the first security measurement signal, the second node performs inverse processing, to obtain the first measurement sequence.

In some scenarios, the first node updates the first communication parameter to obtain a second communication parameter. The first node determines a second random number, and obtains a second security parameter based on the second communication parameter and the second random number, where the second security parameter is used to send or receive a second measurement signal.

For example, the first node scrambles a third measurement sequence based on the second security parameter to obtain a fourth measurement sequence, obtains a second security measurement signal based on the fourth measurement sequence, and sends the second security measurement signal to a third node.

For another example, the first node receives a second security measurement signal from another node, and obtains, based on the second security parameter and the second security measurement signal, a measurement sequence carried in the second security measurement signal.

In the embodiment shown in FIG. 16, the first node determines the random number and the communication parameter, and sends the random number and the communication parameter to the second node. When sending the measurement signal, the first node processes the measurement signal based on the random number and the communication parameter to obtain the security measurement signal, and sends the security measurement signal to complete a ranging process. Correspondingly, the second node receives the measurement signal based on the random number and the communication parameter.

On one hand, the random number is random and is difficult to crack. On the other hand, the communication parameter changes at any time in a communication process. For example, a sequence number of a time unit and a number of a frequency unit change as transmission proceeds, and are also difficult to crack. The measurement signal is processed by using the random number and the communication parameter, so that difficulty in cracking the measurement signal is greatly increased, thereby implementing secure position measurement, and improving communication security.

### [Design 2]

In a possible design, a first random number and a first communication parameter are determined by a receive end of a measurement signal, the receive end sends the first random number and the first communication parameter to a transmit end, and the transmit end and the receive end obtain first security parameters based on the first random number and the first communication parameter, and implement secure transmission of the measurement signal based on the first security parameters. **Optionally, the receive end is a grant node.**

Optionally, the transmit end and the receive end have a communication connection, and support transmission of service data based on the communication connection. The service data includes the first random number and the first communication parameter. For example, as shown in FIG. 6, the design may be applied to G-T ranging. For example, as shown in FIG. 7, the design may be applied to G-T ranging or T-T ranging.

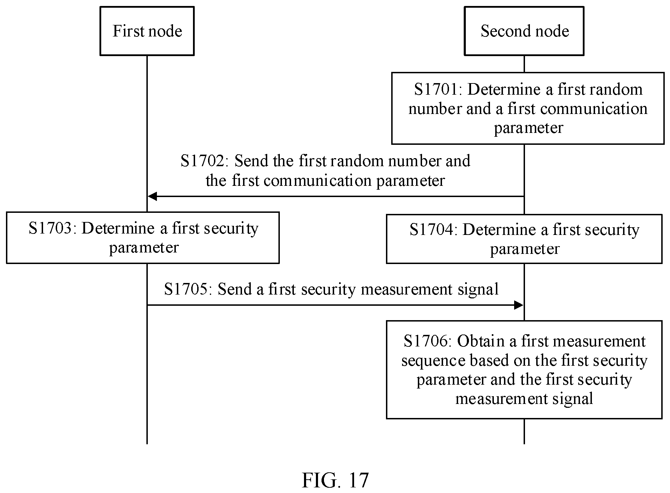

FIG. 17 is a schematic flowchart of still another ranging method according to an embodiment of this application. It should be understood that, for ease of description, a sequence from S1701 to S1706 is used for description herein, but this is not intended to constitute a limitation that the method is necessarily performed in the foregoing sequence. An execution sequence, execution time, a quantity of execution times, and the like of the foregoing one or more steps are not limited in embodiments of this application. S1701 to step S1706 are specifically as follows:
Step S1701: A second node determines a first communication parameter and a first random number.

Refer to related descriptions on the first node side in step S1601. This step is applicable to the second node side.

Step S1702: The second node sends the first random number and the first communication parameter.

Refer to related descriptions on the first node side in step S1602. This step is applicable to the second node side.

Step S1703: The first node determines a first security parameter.

Step S1704: The second node determines a first security parameter.

Step S1705: The first node sends a first security measurement signal. Correspondingly, the second node receives the first security measurement signal from the first node.

Step S1706: The second node obtains a first measurement sequence based on the first security parameter and the first security measurement signal.

For step S1703 to step S1706, refer to step S1603 to step S1606.

In the embodiment shown in FIG. 17, the second node determines the random number and the communication parameter, and sends the random number and the communication parameter to the first node. When sending the measurement signal, the first node processes the measurement signal based on the random number and the communication parameter to obtain the security measurement signal, and sends the security measurement signal to complete a ranging process, thereby implementing secure ranging and improving communication security.

### [Design 3]

In a possible design, a first communication parameter is determined by a third node, and the third node sends the first communication parameter to a transmit end and a receive end. A first random number is determined by the transmit end, and the first random number is sent to the receive end by using the third node. The transmit end and the receive end obtain first security parameters based on the first random number and the first communication parameter, and implement secure transmission of a measurement signal based on the first security parameters.

Optionally, the third node is a grant node.

Alternatively, optionally, the third node is a node communicatively connected to both the first node and the second node.

Optionally, there is no communication connection between the transmit end and the receive end, or service data transmission is not supported between the transmit end and the receive end. For example, as shown in FIG. 6, the design may be applied to T-T ranging, and the third node is a G node.

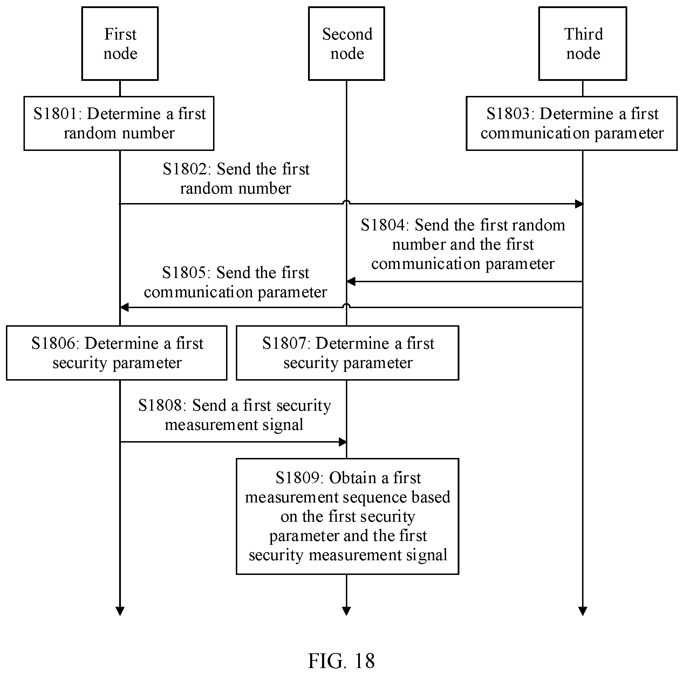

FIG. 18 is a schematic flowchart of still another ranging method according to an embodiment of this application. It should be understood that, for ease of description, a sequence from S1801 to S1809 is used for description herein, but this is not intended to constitute a limitation that the method is necessarily performed in the foregoing sequence. An execution sequence, execution time, a quantity of execution times, and the like of the foregoing one or more steps are not limited in embodiments of this application. S1801 to step S1809 are specifically as follows:
Step S1801: A first node determines a first random number.
Step S1802: The first node sends the first random number to a third node.
Step S1803: The third node determines a first communication parameter.
Step S1803 is an optional step. In other words, the third node may not perform step S1803.

In a possible implementation, the third node does not need to generate a new first communication parameter each time before sending a measurement signal. For example, after the first node generates the communication parameter, the communication parameter is updated. The first node and a second node may perform update based on an original communication parameter, to determine the first communication parameter.

Optionally, the third node may determine a preset value of the communication parameter, and send the preset value to the first node and the second node. The first node and the second node perform update based on the preset value of the communication parameter, to determine a security parameter based on a new communication parameter in a process of sending/receiving the measurement signal for a plurality of times.

Step S1804: The third node sends the first random number and the first communication parameter to the second node. Correspondingly, the second node receives the first random number and the first communication parameter from the third node.

Optionally, the first communication parameter is an optional parameter.

Step S1805: The third node sends the first communication parameter to the first node. Correspondingly, the second node receives the first communication parameter from the first node.

Step S1805 is an optional step. In other words, the third node may not perform step S1805.

Step S1806: The first node determines a first security parameter.

Step S1807: The second node determines a first security parameter.

Step S1808: The first node sends a first security measurement signal.

Step S1809: The second node obtains a first measurement sequence based on the first security parameter and the first security measurement signal.

For step S1806 to step S1809, refer to step S1603 to step S1606.

In the embodiment shown in FIG. 18, the first node determines the random number, and sends the random number to the third node, and the third node forwards the random number to the second node. The third node may further determine a communication parameter and send the communication parameter to the first node and the second node.

When sending the measurement signal, the first node processes the measurement signal based on the random number and the communication parameter to obtain the security measurement signal, and sends the security measurement signal to complete a ranging process, thereby implementing secure ranging and improving node security.

In addition, in the embodiment shown in FIG. 18, ranging can be implemented without a communication connection (which is a communication connection for transmitting service data) between the first node and the second node. For example, the third node forwards the random number and the like, so that random numbers of the first node and the second node are consistent. Communication parameters may also change consistently based on the preset value. In conclusion, in the foregoing embodiment, steps in a ranging procedure are reduced, ranging complexity is reduced, and universality of ranging is improved.

### [Design 4]

In a possible design, a first communication parameter is determined by a third node, and the third node sends the first communication parameter to a transmit end and a receive end. A first random number is determined by the receive end, and the first random number is sent to the transmit end by using the third node. The transmit end and the receive end obtain first security parameters based on the first random number and the first communication parameter, and implement secure transmission of a measurement signal based on the first security parameters.

For related descriptions, refer to related descriptions in the embodiment shown in FIG. 18. However, the first random number is determined by a second node and provided to the third node, and the third node forwards the first random number to the first node.

### [Design 5]

In a possible design, a first random number and a first communication parameter are determined by a third node, and the third node sends the first random number and the first communication parameter to a transmit end and a receive end. The transmit end and the receive end obtain first security parameters based on the first random number and the first communication parameter, and implement secure transmission of a measurement signal based on the first security parameters.

Optionally, the third node is a grant node.

Alternatively, optionally, the third node is a node communicatively connected to both the first node and the second node.

Optionally, there is no communication connection between the transmit end and the receive end, or service data transmission is not supported between the transmit end and the receive end. For example, as shown in FIG. 6, the design may be applied to T-T ranging, and the third node is a G node.

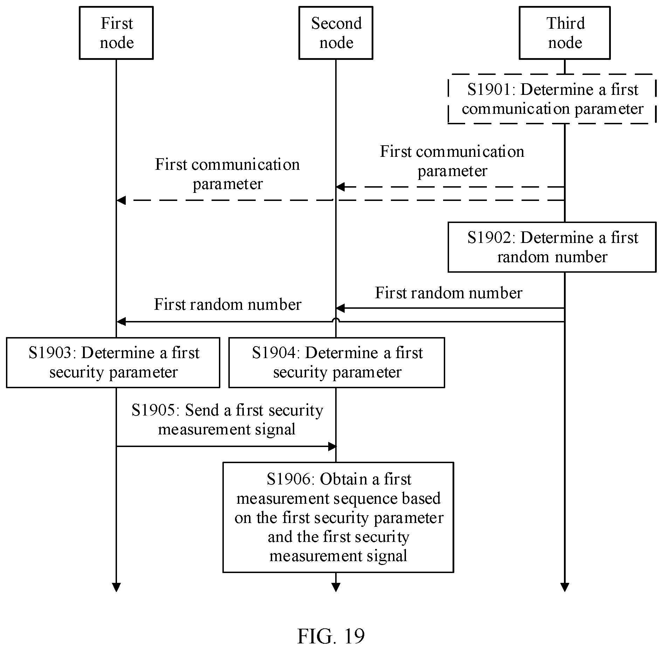

FIG. 19 is a schematic flowchart of still another ranging method according to an embodiment of this application. It should be understood that, for ease of description, a sequence from S1901 to S 1906 is used for description herein, but this is not intended to constitute a limitation that the method is necessarily performed in the foregoing sequence. An execution sequence, execution time, a quantity of execution times, and the like of the foregoing one or more steps are not limited in embodiments of this application. S1901 to step S1906 are specifically as follows:

Step S1901: A third node determines a first communication parameter.

Further, the third node provides a first random number to a first node and a second node. It should be understood that step S1901 is an optional step. In other words, the third node may not perform step S1901.

The third node sends the first communication parameter to the second node. Correspondingly, the second node receives the first communication parameter from the third node.

The third node sends the first communication parameter to the first node. Correspondingly, the first node receives the first communication parameter from the third node.

Step S1902: The third node determines the first random number.

Further, the third node provides the first random number to the first node and the second node.

Step S1903: The first node determines a first security parameter.

Step S1904: The second node determines a first security parameter.

Step S1905: The first node sends a first security measurement signal.

Step S1906: The second node obtains a first measurement sequence based on the first security parameter and the first security measurement signal.

For step S1903 to step S1906, refer to step S1603 to step S1606.

In the embodiment shown in FIG. 19, ranging can be implemented without a communication connection (which is a communication connection for transmitting service data) between the first node and the second node. The third node sends the random number to both ends for measurement, so that random numbers of the first node and the second node are consistent. Communication parameters may also change consistently based on a preset value. In conclusion, in the foregoing embodiment, steps in a ranging procedure are reduced, ranging complexity is reduced, and universality of ranging is improved.

**The foregoing illustrates a process of sending/receiving a single measurement signal, and the following illustrates a multi-node ranging interaction process.**

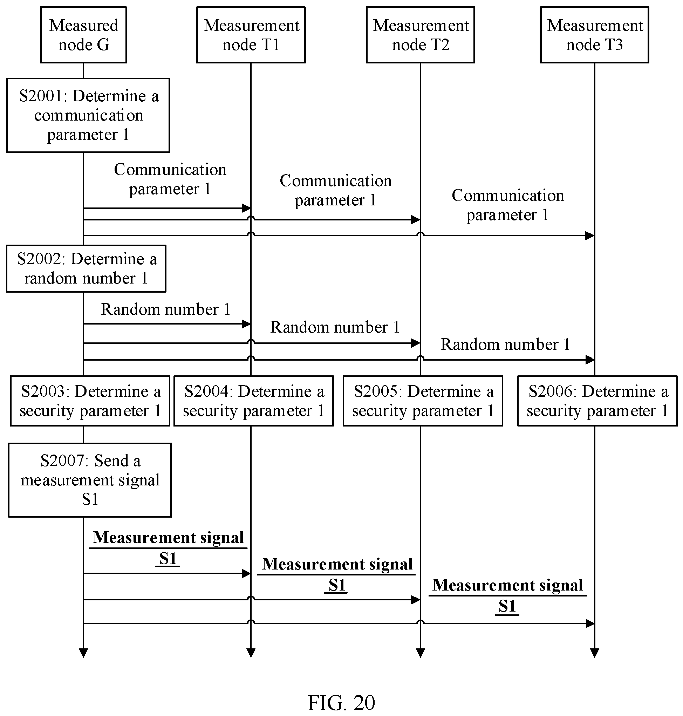

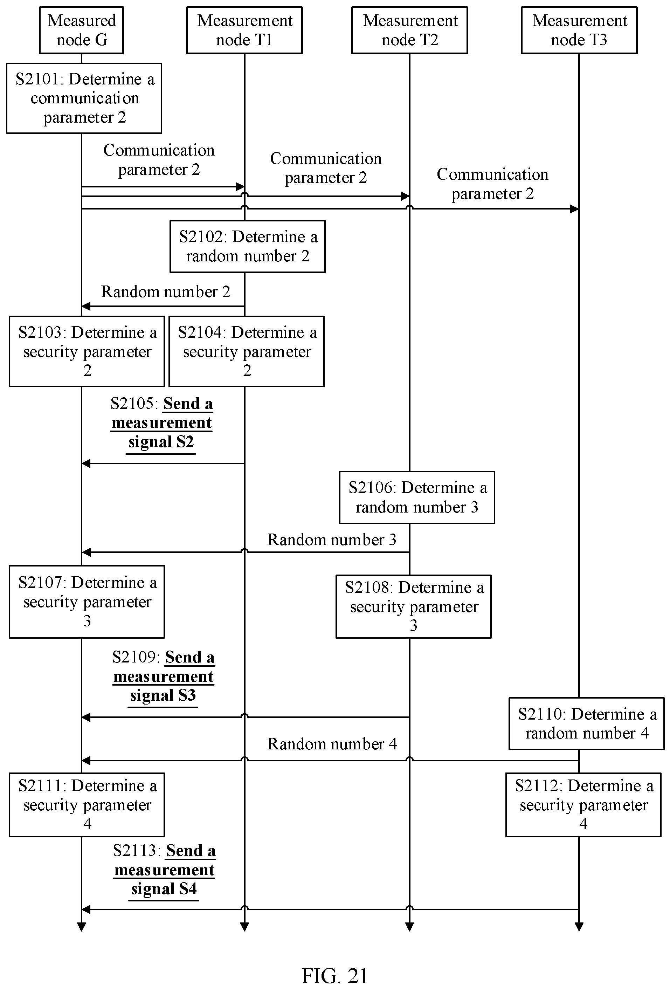

In a possible example, a multi-node ranging process is described with reference to FIG. 20 and FIG. 21 based on the ranging process shown in FIG. 10. Optionally, a measured node G establishes connections to a measurement node T1, a measurement node T2, and a measurement node T3, and a connection manner may be a SparkLink connection, for example, an SLB-based or SLE-based connection.

**The following first describes a process of sending a measurement signal S1 by using an example with reference to** **FIG. 20****.**

FIG. 20 is a schematic flowchart of still another ranging method according to an embodiment of this application. It should be understood that, for ease of description, a sequence from S2001 to S2007 is used for description herein, but this is not intended to constitute a limitation that the method is necessarily performed in the foregoing sequence. An execution sequence, execution time, a quantity of execution times, and the like of the foregoing one or more steps are not limited in embodiments of this application. S2001 to step S2007 are specifically as follows:
Step S2001: A measured node G determines a communication parameter 1.

Further, the measured node G provides the communication parameter 1 (for example, represented as COUNTERr) to measurement nodes, for example, a measurement node T1, a measurement node T2, and a measurement node T3.

Optionally, when frequency hopping needs to be performed, a first node determines a frequency hopping channel sequence, and sends the channel sequence to the measurement node T1, the measurement node T2, and the measurement node T3.

Step S2002: The measured node G determines a random number 1.

Further, the measured node G provides the random number 1 (for example, represented as rand1) to the measurement nodes, for example, the measurement node T1, the measurement node T2, and the measurement node T3.

Optionally, the measured node G further provides a source address and/or a destination address of a measurement signal S1 to the measurement node.

Step S2003: The measured node G determines a security parameter 1.

The security parameter includes some or all bits in a bit sequence (referred to as a bit sequence 1 for ease of differentiation). There may be one or more bit sequences.

In an example, the bit sequence 1=KDF (rand1, COUNTERr, [counter]). COUNTERr is a first communication parameter, and rand1 is a random number 1. For example, an information bit length of the bit sequence 1 is 256 bits or 128 bits.

In a possible implementation, COUNTERr may be determined based on one or more of the following: a super frame number, a radio frame number, a channel number (when frequency hopping is required), a sequence number of a symbol, or the like. Optionally, for different symbols, COUNTERr is different. For example, COUNTERr corresponding to a symbol #1 is 1, and COUNTERr corresponding to a symbol #2 is 2.

In another possible implementation, for each positioning measurement, COUNTERr starts from 0, and is increased by 1 per symbol. When a next measurement symbol is reached, COUNTERr is increased by 1.

Optionally, when a length of a security parameter required by one symbol is less than 256 bits, counter (or counter is a preset value, for example, 0, 1, or a default value) is not required, and one KDF output result (which is a bit sequence) corresponds to one symbol. When a length of a security parameter required by one symbol is greater than 256 bits, counter is increased by 1 to obtain a plurality of KDF output results, and the plurality of KDF output results are truncated or spliced into one security parameter based on the length required by one symbol.

Step S2004: The measurement node T1 determines a security parameter 1. Refer to step S2003.

Step S2005: The measurement node T2 determines a security parameter 1. Refer to step S2003.

Step S2006: The measurement node T3 determines a security parameter 1. Refer to step S2003.

Step S2007: The measured node G sends the measurement signal S1.

The measurement signal S1 is a scrambled measurement signal obtained based on the security parameter 1. Correspondingly, the measurement node T1, the measurement node T2, and the measurement node T3 receive the scrambled measurement signal S1 based on the security parameter 1.

**The following describes a process of sending a measurement signal S2, a measurement signal S3, and a measurement signal S4 by using an example with reference to** **FIG. 21****.**

FIG. 21 is a schematic flowchart of still another ranging method according to an embodiment of this application. It should be understood that, for ease of description, a sequence from S2101 to S2113 is used for description herein, but this is not intended to constitute a limitation that the method is necessarily performed in the foregoing sequence. An execution sequence, execution time, a quantity of execution times, and the like of the foregoing one or more steps are not limited in embodiments of this application. S2101 to S2113 are specifically as follows:
Step S2101: A measured node G determines a communication parameter 2.

Further, the measured node G provides the communication parameter 2 to measurement nodes, for example, a measurement node T1, a measurement node T2, and a measurement node T3.

Optionally, when frequency hopping needs to be performed, the measured node G determines a frequency hopping channel sequence, and sends the channel sequence to the measurement node T1, the measurement node T2, and the measurement node T3.

Step S2102: The measurement node T1 determines a random number 2.

The random number 2 is represented as rand2. Further, the measurement node T1 provides the random number 2 to the measured node G.

Step S2103: The measured node G determines a security parameter 2.

For example, the security parameter 2 is determined based on a bit sequence (referred to as a bit sequence 2 for ease of differentiation). The bit sequence 2=KDF (rand2, COUNTERr, [counter]). For example, an information bit length of the bit sequence 2 is 256 bits or 128 bits.

For related descriptions, refer to step S2003.

Step S2104: The measurement node T1 determines a security parameter 2. Refer to step S2103.

Step S2105: The measurement node T1 sends a measurement signal S2 to the measured node G.

The measurement signal S2 is a scrambled measurement signal obtained based on the security parameter 2. Correspondingly, the measured node G receives the scrambled measurement signal S2 based on the security parameter 2.

Step S2106: The measurement node T2 determines a random number 3.

The random number 3 is represented as rand3. Further, the measurement node T2 provides the random number 3 to the measured node G.

Step S2107: The measured node G determines a security parameter 3.

For example, the security parameter 3 is determined based on a bit sequence (referred to as a bit sequence 3 for ease of differentiation). The bit sequence 3=KDF (rand3, COUNTERr, [counter]). For example, an information bit length of the bit sequence 3 is 256 bits or 128 bits.

For related descriptions, refer to step S2003.

Step S2108: The measurement node T2 determines a security parameter 3. Refer to step S2107.

Step S2109: The measurement node T2 sends a measurement signal S3 to the measured node G.

The measurement signal S3 is a scrambled measurement signal obtained based on the security parameter 3. Correspondingly, the measured node G receives the scrambled measurement signal S3 based on the security parameter 3.

Step S2110: The measurement node T3 determines a random number 4.

The random number 4 is represented as rand4. Further, the measurement node T3 provides the random number 4 to the measured node G.

Step S2111: The measured node G determines a security parameter 4.

For example, the security parameter 4 is determined based on a bit sequence (referred to as a bit sequence 4 for ease of differentiation). The bit sequence 4=KDF (rand4, COUNTERr, [counter]). For example, an information bit length of the bit sequence 4 is 256 bits or 128 bits.

For related descriptions, refer to step S2003.

Step S2112: The measurement node T3 determines a security parameter 4. Refer to step S2111.

Step S2113: The measurement node T3 sends a measurement signal S4 to the measured node G.

The measurement signal S4 is a scrambled measurement signal obtained based on the security parameter 4. Correspondingly, the measured node G receives the scrambled measurement signal S4 based on the security parameter 4.

With reference to FIG. 20 and FIG. 21, the measured node G and the measurement node T1 complete one time of ranging interaction (the measurement signal S1 and the measurement signal S2). In this way, a distance between the measured node G and the measurement node T1 can be computed. Similarly, the measured node G and the measurement node T2 complete one time of ranging interaction (the measurement signal S1 and the measurement signal S3). In this way, a distance between the measured node G and the measurement node T2 can be computed. Similarly, the measured node G and the measurement node T3 complete one time of ranging interaction (the measurement signal S1 and the measurement signal S4). In this way, a distance between the measured node G and the measurement node T3 can be computed.

Based on the measurement signals S1, S2, S3, and S4, an angle and a position of the measured node G can be determined, to position the measured node G.

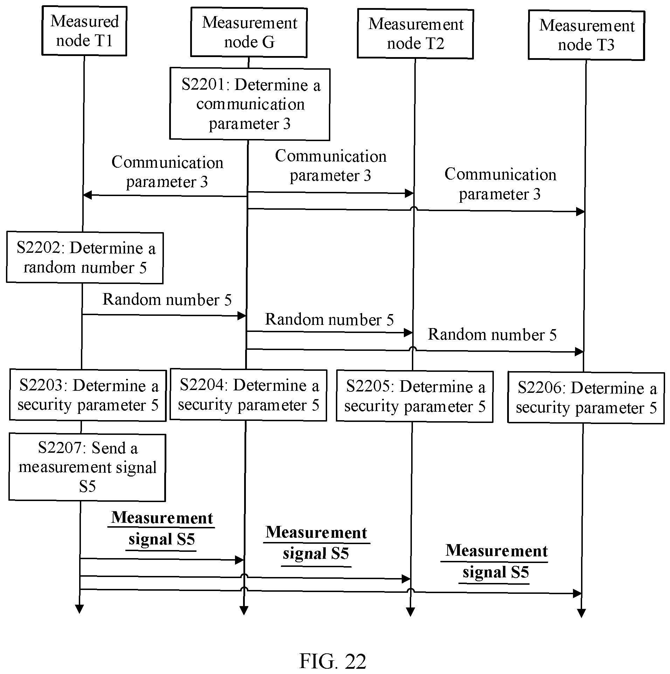

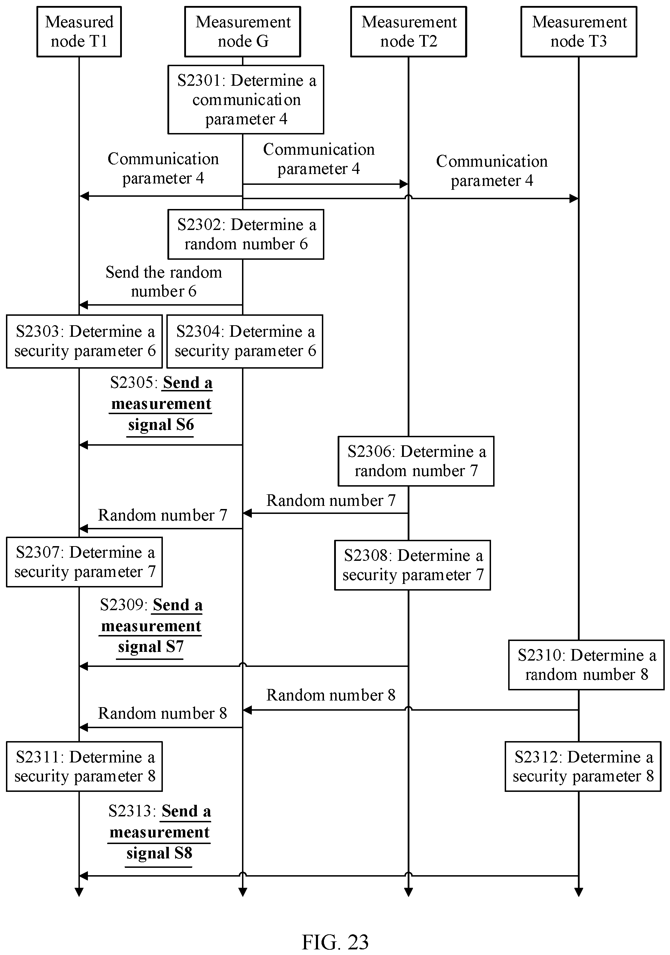

The following uses the ranging process shown in FIG. 12 as an example to describe a possible case of multi-node ranging with reference to FIG. 22 and FIG. 23.

The following first describes a process of sending the measurement signal S5 by using an example.

FIG. 22 is a schematic flowchart of still another ranging method according to an embodiment of this application. It should be understood that, for ease of description, a sequence from S2201 to S2207 is used for description herein, but this is not intended to constitute a limitation that the method is necessarily performed in the foregoing sequence. An execution sequence, execution time, a quantity of execution times, and the like of the foregoing one or more steps are not limited in embodiments of this application. S2201 to step S2207 are specifically as follows:
Step S2201: A measurement node G determines a communication parameter 3.

Further, the measurement node G provides the communication parameter 3 (for example, represented as COUNTERr) to a measured node T1, a measurement node T2, and a measurement node T3.

Optionally, the measurement node G further provides a source address and/or a destination address of a measurement signal S4 to the measured node T1, the measurement node T2, and the measurement node T3.

Optionally, when frequency hopping needs to be performed, a first node determines a frequency hopping channel sequence, and sends the channel sequence to the measurement node T1, the measurement node T2, and the measurement node T3.

Step S2202: The measured node T1 determines a random number 5.

The random number 5 is represented as rand5. Further, the measured node T1 provides the random number 5 (for example, represented as rand5) to the measurement node G, and the measurement node G forwards the random number 5 to another measurement node, for example, the measurement node T2 and the measurement node T3.

Step S2203: The measured node T1 determines a security parameter 5.

For example, the security parameter 5 is determined based on a bit sequence (referred to as a bit sequence 5 for ease of differentiation). The bit sequence 5=KDF (rand5, COUNTERr, [counter]). For example, an information bit length of the bit sequence 5 is 256 bits or 128 bits.

For related descriptions, refer to step S2003.

Step S2204: The measurement node G determines a security parameter 5. Refer to step S2203.

Step S2205: The measurement node T2 determines a security parameter 5. Refer to step S2203.

Step S2206: The measurement node T3 determines a security parameter 5. Refer to step S2203.

Step S2207: The measured node T1 sends a measurement signal S5.

The measurement signal S5 is a scrambled measurement signal obtained based on the security parameter 5. Correspondingly, the measurement node G, the measurement node T2, and the measurement node T3 receive the scrambled measurement signal S1 based on the security parameter 5.

The following describes a process of sending a measurement signal S6, a measurement signal S7, and a measurement signal S8 by using an example.

FIG. 23 is a schematic flowchart of still another ranging method according to an embodiment of this application. It should be understood that, for ease of description, a sequence from S2301 to S2313 is used for description herein, but this is not intended to constitute a limitation that the method is necessarily performed in the foregoing sequence. An execution sequence, execution time, a quantity of execution times, and the like of the foregoing one or more steps are not limited in embodiments of this application. S2301 to S2313 are specifically as follows:
Step S2301: A measurement node G determines a communication parameter 4.

Further, the measurement node G provides the communication parameter 4 to a measured node T1, a measurement node T2, and a measurement node T3.

Optionally, when frequency hopping needs to be performed, the measurement node G determines a frequency hopping channel sequence, and sends the channel sequence to the measured node T1, the measurement node T2, and the measurement node T3.

Step S2302: The measurement node G determines a random number 6.

The random number 6 is represented as rand6. Further, the measurement node G provides the random number 6 to the measurement node T1.

Step S2303: The measured node T1 determines a security parameter 6.

For example, the security parameter 6 is determined based on a bit sequence (referred to as a bit sequence 6 for ease of differentiation). The bit sequence 6=KDF (rand6, COUNTERr, [counter]). For example, an information bit length of the bit sequence 6 is 256 bits or 128 bits.

For related descriptions, refer to step S2003.

Step S2304: The measurement node G determines a security parameter 6. Refer to step S2303.

Step S2305: The measurement node G sends a measurement signal S6 to the measured node T1.

The measurement signal S6 is a scrambled measurement signal obtained based on the security parameter 6. Correspondingly, the measured node T1 receives the scrambled measurement signal S6 based on the security parameter 6.

Step S2306: The measurement node T2 determines a random number 7.

The random number 7 is represented as rand7. Further, the measurement node T2 provides the random number 7 to the measurement node G, and the measurement node G forwards the random number 7 to the to-be-measured node T1.

Step S2307: The measured node T1 determines a security parameter 7.

For example, the security parameter 7 is determined based on a bit sequence (referred to as a bit sequence 7 for ease of differentiation). The bit sequence 7=KDF (rand3, COUNTERr, [counter]). For example, an information bit length of the bit sequence 7 is 256 bits or 128 bits.

For related descriptions, refer to step S2003.

Step S2308: The measurement node T2 determines a security parameter 7. Refer to step S2303.

Step S2309: The measurement node T2 sends a measurement signal S7 to the measured node T1.

The measurement signal S7 is a scrambled measurement signal obtained based on the security parameter 7. Correspondingly, the measured node T1 receives the scrambled measurement signal S7 based on the security parameter 7.

Step S2310: The measurement node T3 determines a random number 8.

The random number 8 is represented as rand8. Further, the measurement node T3 provides the random number 8 to the measurement node G, and the measurement node 8 provides the random number to the measured node T1.

Step S2311: The measured node T1 determines a security parameter 8.

For example, the security parameter 8 is determined based on a bit sequence (referred to as a bit sequence 8 for ease of differentiation). The bit sequence 8=KDF (rand4, COUNTERr, [counter]). For example, an information bit length of the bit sequence 8 is 256 bits or 128 bits.

For related descriptions, refer to step S2003.

Step S2312: The measurement node T3 determines a security parameter 8. Refer to step S2312.

Step S2313: The measurement node T3 sends a measurement signal S8 to the measured node T1.

The measurement signal S8 is a scrambled measurement signal obtained based on the security parameter 8. Correspondingly, the measured node T1 receives the scrambled measurement signal S8 based on the security parameter 8.

With reference to FIG. 22 and FIG. 23, the measured node T1 and the measurement node G complete one time of ranging interaction (the measurement signal S5 and the measurement signal S6). In this way, a distance between the measured node T1 and the measurement node G can be computed. Similarly, the measured node T1 and the measurement node T2 complete one time of ranging interaction (the measurement signal S5 and the measurement signal S7). In this way, a distance between the measured node T1 and the measurement node T2 can be computed. Similarly, the measured node T1 and the measurement node T3 complete one time of ranging interaction (the measurement signal S5 and the measurement signal S8). In this way, a distance between the measured node T1 and the measurement node T2 can be computed.

Based on the measurement signals S5, S6, S7, and S8, an angle and a position of the measured node T1 can be determined, to position the measured node T1.

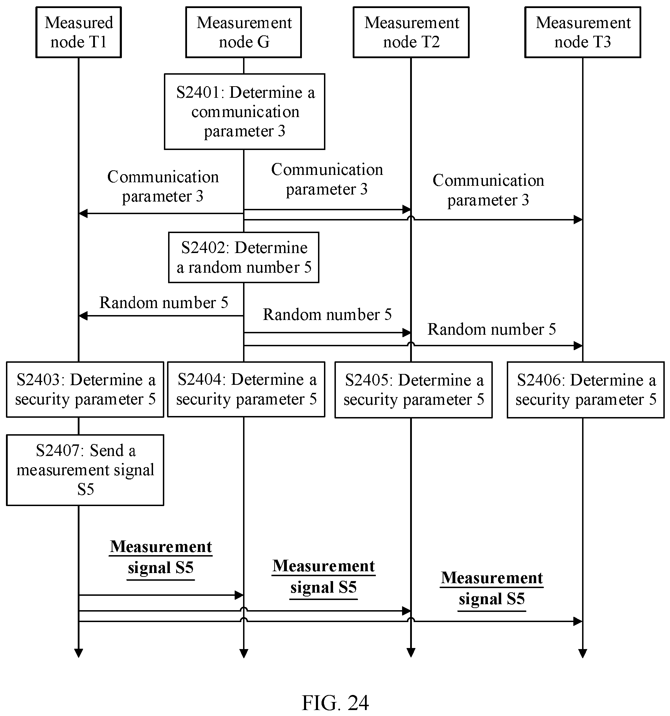

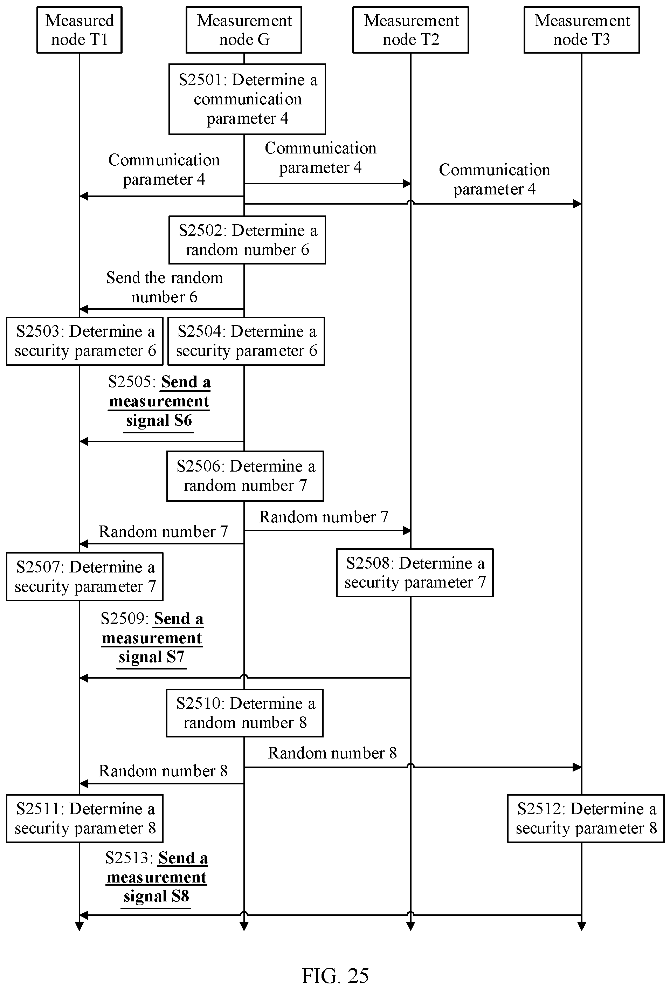

The following uses the ranging process shown in FIG. 12 as an example to describe a possible case of multi-node ranging with reference to FIG. 24 and FIG. 25.

The following first describes a process of sending the measurement signal S5 by using an example.

FIG. 24 is a schematic flowchart of still another ranging method according to an embodiment of this application. It should be understood that, for ease of description, a sequence from S2401 to S2407 is used for description herein, but this is not intended to constitute a limitation that the method is necessarily performed in the foregoing sequence. An execution sequence, execution time, a quantity of execution times, and the like of the foregoing one or more steps are not limited in embodiments of this application. S2401 to step S2407 are specifically as follows:
Step S2401: A measurement node G determines a communication parameter 3. Refer to step S2201.
Step S2402: The measurement node G determines a random number 5.

The random number 5 is represented as rand5. Further, the measurement node G provides the random number 5 to a measured node T1, a measurement node T2, and a measurement node T3.

Step S2403: The measured node T1 determines a security parameter 5.

Step S2404: The measurement node G determines a security parameter 5.

Step S2405: The measurement node T2 determines a security parameter 5.

Step S2406: The measurement node T3 determines a security parameter 5.

Step S2407: The measured node T1 sends a measurement signal S5. For step S2403 to step S2407, refer to step S2203 to step S2207.

The following describes a process of sending a measurement signal S6, a measurement signal S7, and a measurement signal S8 by using an example.

FIG. 25 is a schematic flowchart of still another ranging method according to an embodiment of this application. It should be understood that, for ease of description, a sequence from S2501 to S2513 is used for description herein, but this is not intended to constitute a limitation that the method is necessarily performed in the foregoing sequence. An execution sequence, execution time, a quantity of execution times, and the like of the foregoing one or more steps are not limited in embodiments of this application. S2501 to S2513 are specifically as follows:
Step S2501: A measurement node G determines a communication parameter 4.
Step S2502: The measurement node G determines a random number 6.
Step S2503: A measured node T1 determines a security parameter 6.
Step S2504: The measurement node G determines a security parameter 6.
Step S2505: The measurement node G sends a measurement signal S6 to the measured node T1. For step S2501 to step S2505, refer to step S2301 to step S2305.
Step S2506: The measurement node G determines a random number 7.

The random number 7 is represented as rand7. Further, the measurement node G provides the random number 7 to a measurement node T2 and the measured node T1.

Step S2507: The measured node T1 determines a security parameter 7.

Step S2508: The measurement node T2 determines a security parameter 7.

Step S2509: The measurement node T2 sends a measurement signal S7 to the measured node T1. For step S2507 to step S2509, refer to step S2307 to step S2309.

Step S2510: The measurement node G determines a random number 8.

The random number 7 is represented as rand8. Further, the measurement node G provides the random number 8 to the measurement node T2 and the measured node T1.

Step S2511: The measured node T1 determines a security parameter 8.

Step S2512: A measurement node T3 determines a security parameter 8.

Step S2513: The measurement node T3 sends a measurement signal S8 to the measured node T1. For step S2511 to step S2513, refer to step S2311 to step S2313.

With reference to FIG. 24 and FIG. 25, the measured node T1 and the measurement node G complete one time of ranging interaction (the measurement signal S5 and the measurement signal S6). In this way, a distance between the measured node T1 and the measurement node G can be computed. Similarly, the measured node T1 and the measurement node T2 complete one time of ranging interaction (the measurement signal S5 and the measurement signal S7). In this way, a distance between the measured node T1 and the measurement node T2 can be computed. Similarly, the measured node T1 and the measurement node T3 complete one time of ranging interaction (the measurement signal S5 and the measurement signal S8). In this way, a distance between the measured node T1 and the measurement node T2 can be computed.

Based on the measurement signals S5, S6, S7, and S8, an angle and a position of the measured node T1 can be determined, to position the measured node T1.

The foregoing describes in detail the methods in embodiments of this application. The following provides apparatuses in embodiments of this application.

It should be understood that division of units in the apparatus provided in embodiments of this application is merely logical function division. During actual implementation, all or some of the units may be integrated into one physical entity, or may be physically separated. In addition, the units in the apparatus may be implemented in a form of software invoked by a processor. For example, the apparatus includes a processor. The processor is connected to a memory. The memory stores instructions. The processor invokes the instructions stored in the memory, to implement any one of the foregoing methods or implement functions of each unit of the apparatus. The processor is, for example, a general-purpose processor, for example, a central processing unit (Central Processing Unit, CPU) or a microprocessor. The memory is a memory inside the apparatus or a memory outside the apparatus. Alternatively, the units in the apparatus may be implemented in a form of hardware circuits, and functions of some or all units may be implemented by designing the hardware circuits. The hardware circuits may be understood as one or more processors. For example, in an implementation, the hardware circuit is an application-specific integrated circuit (application-specific integrated circuit, ASIC), and the functions of some or all of the foregoing units are implemented by designing a logical relationship between elements in the circuit. For another example, in another implementation, the hardware circuit may be implemented by using a programmable logic device (programmable logic device, PLD). A field programmable gate array (Field Programmable Gate Array, FPGA) is used as an example, and the field programmable gate array may include a large quantity of logic gate circuits. A configuration file is used to configure a connection relationship between logic gate circuits, to implement functions of some or all of the foregoing units. All units of the foregoing apparatus may be implemented in a form of software invoked by the processor, or all units may be implemented in a form of the hardware circuit, or some units may be implemented in a form of software invoked by the processor, and a remaining part may be implemented in a form of the hardware circuit.

In this embodiment of this application, the processor is a circuit that has a signal processing capability. In an implementation, the processor may be a circuit that has an instruction reading and running capability, for example, a central processing unit (Central Processing Unit, CPU), a microprocessor, a graphics processing unit (graphics processing unit, GPU) (which may be understood as a microprocessor), or a digital signal processor (digital signal processor, DSP). In another implementation, the processor may implement a specific function by using a logical relationship of the hardware circuit. The logical relationship of the hardware circuit is fixed or reconfigurable. For example, the processor is an application-specific integrated circuit (application-specific integrated circuit, ASIC) or a hardware circuit, for example, an FPGA, implemented by a programmable logic device (programmable logic device, PLD). In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as the ASIC, for example, a neural network processing unit (Neural Network Processing Unit, NPU), a tensor processing unit (Tensor Processing Unit, TPU), or a deep learning processing unit (Deep learning Processing Unit, DPU).

It can be learned that each unit of the foregoing apparatus may be one or more processors (or processing circuits) configured to implement the foregoing method, for example, a CPU, a GPU, an NPU, a TPU, a DPU, a microprocessor, a DSP, an ASIC, or an FPGA, or a combination of at least two of these processor forms.

In addition, all or some of the units of the foregoing apparatus may be integrated, or may be implemented independently. In an implementation, these units are integrated together and implemented in a form of a system-on-a-chip (system-on-a-chip, SOC). The SOC may include at least one processor, configured to implement any one of the methods or implement functions of the units of the apparatus. Types of the at least one processor may be different. For example, the at least one processor includes a CPU and an FPGA, a CPU and an artificial intelligence processor, or a CPU and a GPU.

The following lists several possible apparatuses.

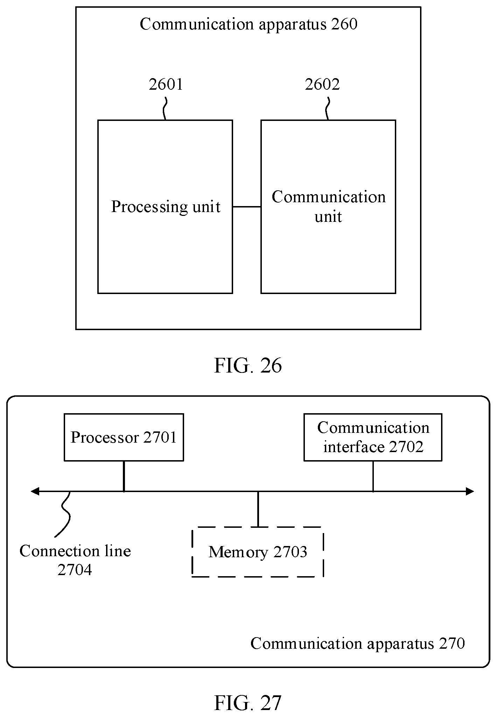

FIG. 26 is a diagram of a structure of a communication apparatus according to an embodiment of this application. Optionally, the communication apparatus 260 may be an independent device, for example, a node. Alternatively, the communication apparatus 260 may be a component, for example, a chip or an integrated circuit, in an independent device (for example, a node). The communication apparatus 260 is configured to implement the foregoing ranging method, for example, the ranging method shown in FIG. 13, FIG. 16, FIG. 17, FIG. 18, FIG. 19, FIG. 20, FIG. 21, FIG. 22, FIG. 23, FIG. 24, or FIG. 25.

In a possible design, the communication apparatus 260 includes a processing unit 2601 and a communication unit 2602. The communication apparatus 260 is configured to implement the method on the transmit end side of the measurement signal in the foregoing ranging method. For example, the communication apparatus 260 is the first node in the embodiment in FIG. 13, FIG. 16, FIG. 17, FIG. 18, or FIG. 19.

**In a possible implementation,** the processing unit 2601 is configured to determine a first security parameter based on a plurality of input parameters, where the plurality of input parameters include a first random number and a first communication parameter;
the processing unit 2601 is further configured to obtain a second measurement sequence based on the first security parameter and a first measurement sequence; and
the communication unit 2602 is configured to send a first security measurement signal, where the first security measurement signal is associated with the second measurement sequence, and the first security measurement signal is used for position information measurement.

**In another possible implementation,** the first communication parameter is related to one or more of the following information:
a sequence number of a first OFDM symbol, a number of a first time unit, or a number of a first frequency unit, where the first OFDM symbol carries the first security measurement signal, the first time unit includes the first OFDM symbol, and the first frequency unit includes a frequency resource used for transmitting the first security measurement signal.

**In still another possible implementation,** the first time unit is included in a plurality of consecutive time units; based on a preset frequency unit number sequence for transmission, frequency hopping transmission is performed on a signal carried in the plurality of consecutive time units; and the number of the first frequency unit belongs to the preset frequency unit number sequence.

**In still another possible implementation,** the first communication parameter is associated with a position of a first OFDM symbol relative to a second OFDM symbol, the first OFDM symbol carries the first security measurement signal, the second OFDM symbol carries a second security measurement signal, and the first communication parameter corresponding to the second security measurement signal is a preset value.

**In still another possible implementation,** the processing unit 2601 is further configured to scramble the first measurement sequence by using the first security parameter, to obtain the second measurement sequence.

**In still another possible implementation,** the processing unit 2601 is further configured to perform exclusive OR on the first security parameter and the first measurement sequence, to obtain the second measurement sequence]

**In still another possible implementation,** the processing unit 2601 is further configured to:
obtain N bit sequences based on the plurality of input parameters, where the N bit sequences include the first security parameter, N is an integer, and N≥1.

**In still another possible implementation,** when N is greater than 1, the plurality of input parameters further include a fresh parameter; and the processing unit 2601 is further configured to:
obtain the N bit sequences based on the first random number, the first communication parameter, and the fresh parameter, where the fresh parameter is updated each time after one of the N bit sequences is obtained.

**In still another possible implementation,** a fresh parameter corresponding to a first bit sequence in the N bit sequences is a preset value, a fresh parameter corresponding to a second bit sequence in the N bit sequences is associated with the preset value and a sequence number of the second bit sequence, and the second bit sequence is different from the first bit sequence.

**In still another possible implementation,** when N is greater than 1, the processing unit 2601 is further configured to:
obtain a 1^{st} bit sequence in the N bit sequences based on the plurality of input parameters; and
obtain an I^{th} bit sequence based on the plurality of input parameters and an (I-1)^{th} bit sequence, where I is an integer, and N≥I≥2.

**In still another possible implementation,** the first security measurement signal includes a plurality of measurement subsignals, and the plurality of measurement subsignals are sent via a plurality of antennas;
the first measurement sequence includes a plurality of first subsequences, the plurality of subsequences respectively generate a plurality of second subsequences by using different parts of the first security parameter, and the plurality of second subsequences belong to the second measurement sequence; and
each measurement subsignal corresponds to one of the plurality of second subsequences.

**In still another possible implementation,** the communication unit 2602 is further configured to send the first security measurement signal to a second node, where the first security measurement signal is used to measure a distance between a first node and the second node.

**In still another possible implementation,** the first random number is determined by the first node; and the communication unit 2602 is further configured to send the first random number to the second node.

In still another possible implementation, the communication unit 2602 is further configured to receive the first random number from the second node.

**In still another possible implementation,** the first random number is determined by the first node; and the communication unit 2602 is further configured to send the first random number to a third node.

**In still another possible implementation,** the communication unit 2602 is further configured to receive a communication address of the second node from the third node.

**In still another possible implementation,** the third node is a node that sends data scheduling information, and the first node is a node that receives and/or sends data based on the data scheduling information.

**In still another possible implementation,** the first communication parameter is from a grant node, and the grant node is a node that sends data scheduling information.

Optionally, the first node is a grant node, or the third node is a grant node, or the second node is a grant node.

**In still another possible implementation,** the first measurement sequence is a pseudo-random sequence.

**In still another possible implementation,.** the plurality of input parameters further include indication information, the indication information indicates at least one of the plurality of antennas, and the first security measurement signal is transmitted via the at least one antenna.

In still another possible design, the communication apparatus 260 includes a processing unit 2601 and a communication unit 2602. The communication apparatus 260 is configured to implement the method on the receive end side of the measurement signal in the foregoing ranging method. For example, the communication apparatus 260 is the second node in the embodiment in FIG. 13, FIG. 16, FIG. 17, FIG. 18, or FIG. 19.

**In a possible implementation,** the processing unit 2601 is configured to determine a first security parameter based on a plurality of input parameters, where the plurality of input parameters include a first random number and a first communication parameter;
the communication unit 2602 is configured to receive a first security measurement signal, where the first security measurement signal is associated with a second measurement sequence, and the first security measurement signal is used for position information measurement; and
the processing unit 2601 is further configured to obtain a first measurement sequence based on the first security parameter and the first security measurement signal.

**In another possible implementation,** the first communication parameter is related to one or more of the following information:
a sequence number of a first OFDM symbol, a number of a first time unit, or a number of a first frequency unit, where the first OFDM symbol carries the first security measurement signal, the first time unit includes the first OFDM symbol, and the first frequency unit includes a frequency resource used for transmitting the first security measurement signal.

**In still another possible implementation,** the first time unit is included in a plurality of consecutive time units; based on a preset frequency unit number sequence for transmission, frequency hopping transmission is performed on a signal carried in the plurality of consecutive time units; and the number of the first frequency unit belongs to the preset frequency unit number sequence.

**In still another possible implementation,** the first communication parameter is associated with a position of a first OFDM symbol relative to a second OFDM symbol, the first OFDM symbol carries the first security measurement signal, the second OFDM symbol carries a second security measurement signal, and the first communication parameter corresponding to the second security measurement signal is a preset value.

**In still another possible implementation,** the processing unit 2601 is further configured to descramble the second measurement sequence by using the first security parameter, to obtain the first measurement sequence.

**In still another possible implementation,** the processing unit 2601 is further configured to perform exclusive OR on the first security parameter and the second measurement sequence, to obtain the first measurement sequence.

**In still another possible implementation,** the processing unit 2601 is further configured to:
obtain N bit sequences based on the plurality of input parameters, where the N bit sequences include the first security parameter, N is an integer, and N≥1.

**In still another possible implementation,** when N is greater than 1, the plurality of input parameters further include a fresh parameter; and the processing unit 2601 is further configured to obtain the N bit sequences based on the first random number, the first communication parameter, and the fresh parameter, where the fresh parameter is updated each time after one of the N bit sequences is obtained.

**In still another possible implementation,** a fresh parameter corresponding to a first bit sequence in the N bit sequences is a preset value, a fresh parameter corresponding to a second bit sequence in the N bit sequences is associated with the preset value and a sequence number of the second bit sequence, and the second bit sequence is different from the first bit sequence.

**In still another possible implementation,** when N is greater than 1, the processing unit 2601 is further configured to:
obtain a 1^{st} bit sequence in the N bit sequences based on the plurality of input parameters; and
obtain an I^{th} bit sequence based on the plurality of input parameters and an (I-1)^{th} bit sequence, where I is an integer, and N≥I≥2.

**In still another possible implementation,** the first security measurement signal includes a plurality of measurement subsignals, and the plurality of measurement subsignals are sent via a plurality of antennas of a first node and are respectively received via a plurality of antennas of a second node;
the first measurement sequence includes a plurality of first subsequences, the plurality of subsequences respectively generate a plurality of second subsequences by using different parts of the first security parameter, and the plurality of second subsequences belong to the second measurement sequence; and
each measurement subsignal corresponds to one of the plurality of second subsequences.

**In still another possible implementation,** the communication unit 2602 is further configured to receive the first random number from the first node.

**In still another possible implementation,** the processing unit 2601 is further configured to determine the first random number; and
the communication unit 2602 is further configured to send the first random number to the first node.

**In still another possible implementation,** the communication unit 2602 is further configured to receive the first random number sent by a third node, where the first random number is from the first node.

**In still another possible implementation,** the communication unit 2602 is further configured to receive a communication address of the first node from the third node.

**In still another possible implementation,** the third node is a node that sends data scheduling information, and the first node is a node that receives and/or sends data based on the data scheduling information.

**In still another possible implementation,** the first communication parameter is from a grant node, and the grant node is a node that sends data scheduling information.

**In still another possible implementation,** the first measurement sequence is a pseudo-random sequence.

**In still another possible implementation,** the plurality of input parameters further include indication information, the indication information indicates at least one of the plurality of antennas, and the first security measurement signal is transmitted via the at least one antenna.

FIG. 27 is a diagram of a structure of another communication apparatus according to an embodiment of this application.

The communication apparatus 270 may be an independent device, for example, a node, or may be a component included in the independent device, for example, a chip, a software module, or an integrated circuit. The communication apparatus 270 may include at least one processor 2701 and a communication interface 2702. Optionally, at least one memory 2703 may be further included. Further, optionally, a connection line 2704 may be included. The processor 2701, the communication interface 2702, and/or the memory 2703 are/is connected through the connection line 2704, and/or communicate with each other through the connection line 2704, to transfer a control signal and/or a data signal.

Specifically:
(1) The processor 2701 is a module for performing an arithmetic operation and/or a logic operation, and may specifically include one or more of the following modules: a filter, a modem, a power amplifier, a low noise amplifier (low noise amplifier, LNA), a baseband processor, a radio frequency processor, a radio frequency circuit, a central processing unit (central processing unit, CPU), an application processor (application processor, AP), a microcontroller unit (microcontroller unit, MCU), an electronic control unit (electronic control unit, ECU), a graphics processing unit (graphics processing unit, GPU), a microprocessor unit (microprocessor unit, MPU), an application-specific integrated circuit (application-specific integrated Circuit, ASIC), an image signal processor (image signal processor, ISP), a digital signal processor (digital signal processor, DSP), a field programmable gate array (field programmable gate array, FPGA), a complex programmable logic device (complex programmable logic device, CPLD), a coprocessor, or the like.
(2) The communication interface 2702 may be configured to provide an information input or output for the at least one processor, or configured to receive a signal sent externally and/or send a signal to the outside.

For example, the communication interface 2702 may include an interface circuit.

For example, the communication interface 2702 may be a wired link interface including an Ethernet cable and the like, or may be a wireless link (Wi-Fi, Bluetooth, universal wireless transmission, a vehicle-mounted short-range communication technology, another short-range wireless communication technology, or the like) interface.

Optionally, the communication interface 2702 may further include a radio frequency transmitter, an antenna, and the like. When the communication interface 2702 includes an antenna, there may be one or more antennas.

In a possible design, if the communication apparatus 270 is an independent device, the communication interface 2702 may include a receiver and a transmitter. The receiver and the transmitter may be a same component or different components. When the receiver and the transmitter are a same component, the component may be referred to as a transceiver.

In another possible design, if the communication apparatus 270 is a chip or a circuit, the communication interface 2702 may include an input interface and an output interface, and the input interface and the output interface may be a same interface or different interfaces.

Optionally, a function of the communication interface 2702 may be implemented through a transceiver circuit or a dedicated transceiver chip.

(3) The memory 2703 is configured to provide storage space, and the storage space may store data such as an operating system and a computer program. The memory 2703 may be one or a combination of a random access memory (random access memory, RAM), a read-only memory (read-only memory, ROM), an erasable programmable read-only memory (erasable programmable read only memory, EPROM), a compact disc read-only memory (compact disc read-only memory, CD-ROM), or the like.

Functions and actions of modules or units in the communication apparatus 270 listed above are merely examples for description.

Functional units in the communication apparatus 270 may be configured to implement the foregoing ranging method, for example, the ranging method shown in FIG. 13, FIG. 16, FIG. 17, FIG. 18, FIG. 19, FIG. 20, FIG. 21, FIG. 22, FIG. 23, FIG. 24, or FIG. 25.

Optionally, the processor 2701 may be a processor (referred to as a dedicated processor for ease of differentiation) that is specially configured to perform the foregoing method, or may be a processor (referred to as a dedicated processor for ease of differentiation) that invokes a computer program to perform the foregoing method. Optionally, the at least one processor may further include both a dedicated processor and a general-purpose processor.

Optionally, when the communication apparatus 270 includes at least one memory 2703, if the processor 2701 implements the foregoing ranging method by invoking a computer program, the computer program may be stored in the memory 2703.

An embodiment of this application further provides a chip. The chip includes a logic circuit and a communication interface. The communication interface is configured to receive a signal or send a signal, and the logic circuit is configured to receive a signal or send a signal through the communication interface. The chip is configured to implement the foregoing ranging method, for example, the ranging method shown in FIG. 13, FIG. 16, FIG. 17, FIG. 18, FIG. 19, FIG. 20, FIG. 21, FIG. 22, FIG. 23, FIG. 24, or FIG. 25.

An embodiment of this application further provides a computer-readable storage medium. The computer-readable storage medium stores instructions. When the instructions are run on at least one processor (or communication apparatus), the foregoing ranging method is implemented, for example, the ranging method shown in FIG. 13, FIG. 16, FIG. 17, FIG. 18, FIG. 19, FIG. 20, FIG. 21, FIG. 22, FIG. 23, FIG. 24, or FIG. 25 is implemented.

An embodiment of this application further provides a computer program product. The computer program product includes computer instructions, and the computing instructions are used to implement the foregoing ranging method, for example, the ranging method shown in FIG. 13, FIG. 16, FIG. 17, FIG. 18, FIG. 19, FIG. 20, FIG. 21, FIG. 22, FIG. 23, FIG. 24, or FIG. 25.

An embodiment of this application further provides a terminal. The terminal includes the foregoing communication apparatus 260 and/or communication apparatus 270.

In a possible implementation, the terminal includes a first node and/or a second node. The first node includes the foregoing communication apparatus 260, and the second node includes the foregoing communication apparatus 260.

The terminal may be a smart terminal or a transportation vehicle like a vehicle, an uncrewed aerial vehicle, or a robot.

It should be noted that, in embodiments of this application, the word "example" or "for example" is used to represent giving an example, an illustration, or a description. Any embodiment or design scheme described as an "example" or "for example" in this application should not be explained as being more preferred or having more advantages than another embodiment or design scheme. To be precise, use of the word such as "example" or "for example" is intended to present a relative concept in a specific manner.

In embodiments of this application, "at least one" means one or more, and "a plurality of" means two or more. "At least one of the following items (pieces)" or a similar expression thereof indicates any combination of these items, including a single item (piece) or any combination of a plurality of items (pieces).

For example, at least one item (piece) of a, b, and c may indicate: a, b, c, (a and b), (a and c), (b and c), or (a, b, and c), where a, b, and c may be singular or plural. "And/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects.

In addition, unless otherwise stated, ordinal numbers such as "first" and "second" in embodiments of this application are for differentiation between a plurality of objects, but are not intended to limit an order, a time sequence, priorities, or importance of the plurality of obj ects. For another example, the first node and the second node are merely used to facilitate description of fresh parameters in different implementations, and do not indicate different execution operations, importance degrees, structures, and the like of the first node and the second node.

According to the context, the term "when" used in the foregoing embodiments may be interpreted as "if", "after", "in response to determining", or "in response to detecting". The foregoing descriptions are merely optional embodiments of this application, but are not intended to limit this application. Any modification, equivalent replacement, improvement, or the like made within the concept and principle of this application shall fall within the protection scope of this application.

A person of ordinary skill in the art may understand that all or some of the steps of the embodiments may be implemented by hardware or a program instructing related hardware. The program may be stored in a computer-readable storage medium. The storage medium may be a read-only memory, a magnetic disk, an optical disc, or the like.

## Claims

1. A ranging method, wherein the method comprises:
determining a first security parameter based on a plurality of input parameters, wherein the plurality of input parameters comprise a first random number and a first communication parameter;
obtaining a second measurement sequence based on the first security parameter and a first measurement sequence; and
sending a first security measurement signal, wherein the first security measurement signal is associated with the second measurement sequence, and the first security measurement signal is used for position information measurement.

2. The method according to claim 1, wherein the first communication parameter is related to one or more of the following information:
a sequence number of a first OFDM symbol, a number of a first time unit, or a number of a first frequency unit, wherein the first OFDM symbol carries the first security measurement signal, the first time unit comprises the first OFDM symbol, and the first frequency unit comprises a frequency resource used for transmitting the first security measurement signal.

3. The method according to claim 2, wherein the first time unit is comprised in a plurality of consecutive time units; based on a preset frequency unit number sequence for transmission, frequency hopping transmission is performed on a signal carried in the plurality of consecutive time units; and the number of the first frequency unit belongs to the preset frequency unit number sequence.

4. The method according to claim 1, wherein the first communication parameter is associated with a position of a first OFDM symbol relative to a second OFDM symbol, the first OFDM symbol carries the first security measurement signal, the second OFDM symbol carries a second security measurement signal, and the first communication parameter corresponding to the second security measurement signal is a preset value.

5. The method according to any one of claims 1 to 4, wherein obtaining the second measurement sequence based on the first security parameter and the first measurement sequence comprises:
scrambling the first measurement sequence by using the first security parameter, to obtain the second measurement sequence;
or
performing exclusive OR on the first security parameter and the first measurement sequence, to obtain the second measurement sequence.

6. The method according to any one of claims 1 to 5, wherein determining the first security parameter based on the plurality of input parameters comprises:
obtaining N bit sequences based on the plurality of input parameters, wherein the N bit sequences comprise the first security parameter, N is an integer, and N≥1.

7. The method according to claim 6, wherein when N is greater than 1, the plurality of input parameters further comprise a fresh parameter; and obtaining the N bit sequences based on the plurality of input parameters comprises:
obtaining the N bit sequences based on the first random number, the first communication parameter, and the fresh parameter, wherein the fresh parameter is refreshed each time after one of the N bit sequences is obtained.

8. The method according to claim 7, wherein
a fresh parameter corresponding to a first bit sequence in the N bit sequences is a preset value, a fresh parameter corresponding to a second bit sequence in the N bit sequences is associated with the preset value and a sequence number of the second bit sequence, and the second bit sequence is different from the first bit sequence.

9. The method according to any one of claims 6 to 8, wherein when N is greater than 1, obtaining the N bit sequences based on the plurality of input parameters comprises:
obtaining a 1^{st} bit sequence in the N bit sequences based on the plurality of input parameters; and
obtaining an I^{th} bit sequence based on the plurality of input parameters and an (I-1)^{th} bit sequence, wherein I is an integer, and N≥I≥2.

10. The method according to any one of claims 6 to 9, wherein the first security measurement signal comprises a plurality of measurement subsignals, and the plurality of measurement subsignals are sent via a plurality of antennas;
the first measurement sequence comprises a plurality of first subsequences, the plurality of subsequences respectively generate a plurality of second subsequences by using different parts of the first security parameter, and the plurality of second subsequences belong to the second measurement sequence; and
each measurement subsignal corresponds to one of the plurality of second subsequences.

11. The method according to any one of claims 1 to 10, wherein the method is applied to a first node, and the method further comprises:
sending the first security measurement signal to a second node, wherein the first security measurement signal is used to measure a distance between the first node and the second node.

12. The method according to claim 11, wherein the first random number is determined by the first node; and the method further comprises:
sending the first random number to the second node.

13. The method according to claim 11, wherein the method further comprises:
receiving the first random number from the second node.

14. The method according to claim 11, wherein the first random number is determined by the first node; and the method further comprises:
sending the first random number to a third node.

15. The method according to claim 14, wherein the method further comprises:
receiving a communication address of the second node from the third node.

16. The method according to claim 14 or 15, wherein the third node is a node that sends data scheduling information, and the first node is a node that receives and/or sends data based on the data scheduling information.

17. The method according to any one of claims 1 to 16, wherein the first communication parameter is from a grant node, and the grant node is a node that sends data scheduling information.

18. The method according to any one of claims 1 to 17, wherein the first measurement sequence is a pseudo-random sequence.

19. The method according to any one of claims 1 to 18, wherein the plurality of input parameters further comprise indication information, and the indication information indicates at least one of the plurality of antennas; and
the first security measurement signal is transmitted via the at least one antenna.

20. A ranging method, wherein the method comprises:
determining a first security parameter based on a plurality of input parameters, wherein the plurality of input parameters comprise a first random number and a first communication parameter;
receiving a first security measurement signal, wherein the first security measurement signal is associated with the second measurement sequence, and the first security measurement signal is used for position information measurement; and
obtaining a first measurement sequence based on the first security parameter and the first security measurement signal.

21. The method according to claim 20, wherein the first communication parameter is related to one or more of the following information:
a sequence number of a first OFDM symbol, a number of a first time unit, or a number of a first frequency unit, wherein the first OFDM symbol carries the first security measurement signal, the first time unit comprises the first OFDM symbol, and the first frequency unit comprises a frequency resource used for transmitting the first security measurement signal.

22. The method according to claim 21, wherein the first time unit is comprised in a plurality of consecutive time units; based on a preset frequency unit number sequence for transmission, frequency hopping transmission is performed on a signal carried in the plurality of consecutive time units; and the number of the first frequency unit belongs to the preset frequency unit number sequence.

23. The method according to claim 19, wherein the first communication parameter is associated with a position of a first OFDM symbol relative to a second OFDM symbol, the first OFDM symbol carries the first security measurement signal, the second OFDM symbol carries a second security measurement signal, and the first communication parameter corresponding to the second security measurement signal is a preset value.

24. The method according to any one of claims 20 to 23, wherein obtaining the first measurement sequence based on the first security parameter and the first security measurement signal comprises:
descrambling the second measurement sequence by using the first security parameter, to obtain the first measurement sequence;
or
performing exclusive OR on the first security parameter and the second measurement sequence, to obtain the first measurement sequence.

25. The method according to any one of claims 20 to 24, wherein determining the first security parameter based on the plurality of input parameters comprises:
obtaining N bit sequences based on the plurality of input parameters, wherein the N bit sequences comprise the first security parameter, N is an integer, and N≥1.

26. The method according to claim 25, wherein when N is greater than 1, the plurality of input parameters further comprise a fresh parameter; and obtaining the N bit sequences based on the plurality of input parameters comprises:
obtaining the N bit sequences based on the first random number, the first communication parameter, and the fresh parameter, wherein the fresh parameter is refreshed each time after one of the N bit sequences is obtained.

27. The method according to claim 26, wherein a fresh parameter corresponding to a first bit sequence in the N bit sequences is a preset value, a fresh parameter corresponding to a second bit sequence in the N bit sequences is associated with the preset value and a sequence number of the second bit sequence, and the second bit sequence is different from the first bit sequence.

28. The method according to any one of claims 25 to 27, wherein when N is greater than 1, obtaining the N bit sequences based on the plurality of input parameters comprises:
obtaining a 1^{st} bit sequence in the N bit sequences based on the plurality of input parameters; and
obtaining an I^{th} bit sequence based on the plurality of input parameters and an (I-1)^{th} bit sequence, wherein I is an integer, and N≥I≥2.

29. The method according to claim 25, wherein the first security measurement signal comprises a plurality of measurement subsignals, and the plurality of measurement subsignals are sent via a plurality of antennas of the first node and are respectively received via a plurality of antennas of the second node;
the first measurement sequence comprises a plurality of first subsequences, the plurality of subsequences respectively generate a plurality of second subsequences by using different parts of the first security parameter, and the plurality of second subsequences belong to the second measurement sequence; and
each measurement subsignal corresponds to one of the plurality of second subsequences.

30. The method according to any one of claims 20 to 29, wherein the method further comprises:
receiving the first random number from the first node.

31. The method according to claim 30, wherein the method further comprises:
determining the first random number; and
sending the first random number to the first node.

32. The method according to any one of claims 20 to 29, wherein the method further comprises:
receiving the first random number sent by a third node, wherein the first random number is from the first node.

33. The method according to claim 32, wherein the method further comprises:
receiving a communication address of the first node from the third node.

34. The method according to claim 32 or 33, wherein the third node is a node that sends data scheduling information, and the first node is a node that receives and/or sends data based on the data scheduling information.

35. The method according to any one of claims 20 to 34, wherein the first communication parameter is from a grant node, and the grant node is a node that sends data scheduling information.

36. The method according to any one of claims 20 to 35, wherein the first measurement sequence is a pseudo-random sequence.

37. The method according to any one of claims 20 to 36, wherein the plurality of input parameters further comprise indication information, the indication information indicates at least one of the plurality of antennas, and the first security measurement signal is transmitted via the at least one antenna.

38. A communication apparatus, comprising a processing unit and a communication unit, wherein the communication apparatus is configured to implement the ranging method according to any one of claims 1 to 19.

39. A communication apparatus, comprising an obtaining unit and a sending unit, wherein the communication apparatus is configured to implement the ranging method according to any one of claims 20 to 37.

40. A communication apparatus, wherein the communication apparatus comprises a processor; and
when the processor invokes a computer program or instructions in a memory, the method according to any one of claims 1 to 19 is performed, or the method according to any one of claims 20 to 37 is performed.

41. A chip, wherein the chip comprises a processor; and
when the processor invokes a computer program or instructions in a memory, the method according to any one of claims 1 to 19 is performed, or the method according to any one of claims 20 to 37 is performed.

42. A communication system, wherein the communication system comprises a first node and a second node;
the first node comprises the communication apparatus according to claim 39; and
the second node comprises the communication apparatus according to claim 40.

43. The communication system according to claim 42, wherein the communication system further comprises a grant node, and the grant node is communicatively connected to the first node and the second node.

44. A terminal, wherein the terminal comprises the communication apparatus according to claim 39, the communication apparatus according to claim 40, the communication apparatus according to claim 41, or the communication apparatus according to claim 42 or 43.

45. A computer-readable storage medium, wherein the computer-readable storage medium is configured to store instructions or a computer program; and
when the instructions or the computer program is executed, the method according to any one of claims 1 to 19 is implemented, or the method according to any one of claims 20 to 37 is implemented.

46. A computer program product, comprising instructions or a computer program, wherein
when the instructions or the computer program is executed, the method according to any one of claims 1 to 19 is implemented, or the method according to any one of claims 20 to 37 is implemented.
